# EUROPEAN PATENT APPLICATION

(11) **EP 4 663 447 A1**
(43) Date of publication of application: **17.12.2025**
(21) Application number: 25181467.9
(22) Date of filing: 06.06.2025
(51) Int. Cl.: B60K 6/26, B60K 6/445, B60K 6/448, B60K 6/52, B60W 10/06, B60W 10/08, B60W 20/17

(54) **DRIVE APPARATUS FOR VEHICLE**

(30) Priority: 14.06.2024 JP 2024097059
(71) Applicant: TOYOTA JIDOSHA KABUSHIKI KAISHA, Toyota-shi, Aichi-ken 471-8571 (JP)
(72) Inventor: IMAMURA, Tatsuya, Toyota-shi, 471-8571 (JP); YOSHINO, Hirotsugu, Toyota-shi, 471-8571 (JP); SUZUKI, Yosuke, Toyota-shi, 471-8571 (JP)
(74) Representative: D Young & Co LLP

(57) **Abstract**

A drive apparatus (10;310;410;510) for a vehicle (8;300;400;500), including: an engine (20); first through third electric motors (MG1,MG2,MG3); a differential mechanism (32;332;432;532); a first drive shaft (38) for driving front wheels (12f); a second drive shaft (58) for driving rear wheels (12r); and a processor (70). The differential mechanism (32;332;432;532) includes first through third rotary elements (RE1,RE2,RE3). The engine (20) and the first electric motor (MG1) are connected to the first rotary element (RE1). The second electric motor (MG2) is connected to the second rotary element (RE2). The first drive shaft (38) is connected to the third rotary element (RE3). The third electric motor (MG3) is connected to the second drive shaft (58). When the vehicle (8;300;400;500) is in a predetermined driving state, the processor is configured to control the first, second and third electric motors (MG1,MG2,MG3) such that the first electric motor (MG1) is caused to generate a positive torque and the second electric motor (MG2) is caused to generate a reaction torque (Tmg2) and such that the third electric motor (MG3) is caused to generate the positive torque.

## Description

### FIELD OF THE INVENTION

The present invention relates to a drive apparatus for a vehicle, wherein the drive apparatus includes an engine, three electric motors, a differential mechanism, drive shafts for driving front and rear wheels of the vehicle, and a control apparatus.

### BACKGROUND OF THE INVENTION

There is well known a drive apparatus for a vehicle, which includes: an engine; a first electric motor; a second electric motor; a third electric motor; a differential mechanism; a first drive shaft for driving one of front and rear wheels of the vehicle; a second drive shaft for driving the other of the front and rear wheels; and a control apparatus. For example, JP 2018-118549A discloses such a drive apparatus. In the drive apparatus disclosed in this Japanese Patent Application Publication, the differential mechanism includes four rotary elements consisting of a first rotary element, a second rotary element, a third rotary element and a fourth rotary element. Further, in the disclosed drive apparatus, the engine is connected to the first rotary element, the first electric motor is connected to the second rotary element, the second electric motor is connected to the third rotary element, and the first drive shaft is connected to the fourth rotary element. In addition, in the disclosed drive apparatus, the third electric motor is connected to the second drive shaft. In the disclosed drive apparatus, in order to improve a power performance when the vehicle starts to run or runs at a low or medium speed, and to solve problem of shortage of a drive power, the first, second and third electric motors are controlled such that the first and second electric motors output respective torques acting in the same direction as a torque of the engine that drives the vehicle in a forward direction and such that the third electric motor outputs a torque that drives the vehicle in the forward direction as the torque of the engine.

### SUMMARY OF THE INVENTION

By the way, in the drive apparatus disclosed in the above-identified Japanese Patent Application Publication, a compound split mode and an input split mode can be established. In the compound split mode, one of the first and second electric motors is operated to serve as an electric generator, and the other of the first and second electric motors is operated to serve as a prime mover to drive the first drive shaft, while the engine is operated. In the input split mode, one of the first and second electric motors is operated to serve as the electric generator, and the third electric motor is operated to serve as the prime mover to drive the second drive shaft, while the engine is operated. However, when the vehicle is caused to run with the engine being operated, the first or second electric motor is caused to generate a torque acting against the torque of the engine, so that vibration of the torque of the engine is transmitted to the first drive shaft whereby a body of the vehicle is likely to be vibrated.

The present invention was made in view of the background art described above. It is therefore an object of the present invention to provide a drive apparatus for a vehicle, wherein the drive apparatus is capable of reducing vibration of a body of the vehicle when the vehicle is caused to run with an engine being operated, while improving a power performance when the vehicle is in a predetermined driving state.

The object indicated above is achieved according to the following aspects of the present invention.

According to a first aspect of the invention, there is provided a drive apparatus for a vehicle. The drive apparatus includes: (a) an engine; (b) a first electric motor; (c) a second electric motor; (d) a third electric motor; (e) a differential mechanism; (f) a first drive shaft for driving one of front and rear wheels of the vehicle; (g) a second drive shaft for driving the other of the front and rear wheels; and (h) a control apparatus including a processor. The differential mechanism includes a first rotary element, a second rotary element and a third rotary element. The engine and the first electric motor are connected to the first rotary element, the second electric motor is connected to the second rotary element, and the first drive shaft is connected to the third rotary element. The third electric motor is connected to the second drive shaft. When the vehicle is in a predetermined driving state, the processor is configured to control the first, second and third electric motors, such that the first electric motor is caused to generate a positive torque, such that the second electric motor is caused to generate a reaction torque, and such that the third electric motor is caused to generate the positive torque.

According to a second aspect of the invention, in the drive apparatus according to the first aspect of the invention, the processor is configured to cause the second electric motor to increase the reaction torque in a stepwise manner, in addition to causing the second electric motor to generate the reaction torque.

According to a third aspect of the invention, in the drive apparatus according to the second aspect of the invention, the processor is configured to increase the reaction torque of the second electric motor in the stepwise manner, in a response to an operation that is made by a driver of the vehicle to increase a drive power.

In the drive apparatus according to the first aspect of the invention, the differential mechanism includes three rotary elements consisting of the first through third rotary elements. The engine and the first electric motor are connected to the first rotary element. The second electric motor is connected to the second rotary element, and the first drive shaft is connected to the third rotary element. The third electric motor is connected to the second drive shaft. When the vehicle is caused to run with the engine being operated, the first electric motor, which is connected to the same rotary element as the engine, is operated as an electric generator, and the third electric motor is operated as a prime mover by an electric power generated by the first electric motor, whereby the second drive shaft is driven, so as to perform a so-called series driving. In the series driving, torque vibration of the engine can be prevented from being transmitted to the first drive shaft, so that a body of the vehicle is less likely to be vibrated when the vehicle is caused to run with the engine being operated. Further, when the vehicle is in the predetermined driving state, the processor is configured to control the first, second and third electric motors, such that the first electric motor is caused to generate the positive torque, such that the second electric motor is caused to generate the reaction torque, and such that the third electric motor is caused to generate the positive torque. Thus, even in the predetermined driving state such as a state in which the vehicle starts to run or runs at an extremely low running speed, for example, in each of the first and second electric motors, it is possible to transmit the positive torque to the first drive shaft while suppressing continuous flow of large current biased to a specific phase of an inverter. In addition, in the third electric motor, the positive torque can be transmitted to the second drive shaft, so that it is possible to improve power performance of the vehicle in the predetermined driving state.

In the drive apparatus according to the second aspect of the invention, the processor is configured to cause the second electric motor to increase the reaction torque in the stepwise manner, in addition to causing the second electric motor to generate the reaction torque. With the reaction torque of the second electric motor being increased in the stepwise manner, an inertial torque is maintained in the first rotary element, and the torque transmitted to the first drive shaft can be temporarily increased. For example, even when the engine and the first electric motor are maxing out their torques, the drive power can be temporarily increased.

In the drive apparatus according to the third aspect of the invention, the processor is configured to increase the reaction torque of the second electric motor in the stepwise manner, in a response to the operation that is made by the driver of the vehicle to increase the drive power. Thus, the drive power can be increased in accordance with an intention of the driver, so that it is possible to improve drivability of the vehicle in a situation in which the drive power is required.

### BRIEF DESCRIPTION OF THE DRAWINGS

FIG 1 is a view schematically showing a construction of a vehicle provided with a vehicle drive apparatus (single pinion_U/D type) to which the present invention is applied;
FIG 2 is a view showing a construction of the vehicle drive apparatus, by using a collinear diagram;
FIG 3 is a view showing main parts of a control system for various controls in the vehicle drive apparatus;
FIG 4 is a collinear diagram for explaining BEV mode in which each of first and second electric motors is caused to generate a torque;
FIG 5 is a collinear diagram for explaining BEV mode in which the second electric motor is caused to generate the torque, with a brake being in its engaged state;
FIG 6 is a collinear diagram for explaining BEV mode in which a third electric motor is caused to generate the torque, with the brake being in the engaged state;
FIGS. 7A and 7B are collinear diagrams for explaining first HEV mode (series mode) in which an engine is driven and rotated, and an electric power is transferred between the first and third electric motors, wherein FIG 7A shows a case in which the third electric motor is caused to generate the torque by the electric power generated by the first electric motor, and FIG 7B shows a case in which an engine brake is generated by a power driving of the first electric motor that consumes the electric power generated by the third electric motor;
FIGS. 8A and 8B are collinear diagrams for explaining second HEV mode (input split mode) in which the engine is operated whereby the electric power is transferred between the second and third electric motors, wherein FIG 8A shows a case in which the third electric motor is caused to generate the torque by the electric power generated by the second electric motor, and FIG 8B shows a case in which the second electric motor is caused to generate the torque by the electric power generated by the third electric motor;
FIGS. 9A and 9B are collinear diagrams for explaining third HEV mode (output split mode) in which the engine is operated whereby the electric power is transferred between the first and second electric motors, wherein FIG 9A shows a case in which the second electric motor is caused to generate the torque by the electric power generated by the first electric motor, and FIG 9B shows a case in which the first electric motor is caused to generate the torque by the electric power generated by the second electric motor;
FIG 10 is a view showing an example of a drive-mode switching map to be used for controlling switching of a drive mode of the vehicle, wherein this example is to be used in a charged-power consuming driving;
FIG 11 is a view showing an example of the drive-mode switching map to be used for controlling switching of the drive mode, wherein this example is to be used in a charged-power maintaining driving;
FIG 12 is a view showing an example of the drive-mode switching map to be used for controlling switching of the drive mode, wherein this example is to be used in the charged-power consuming driving, and wherein a drive power (shown in FIG 10) is replaced by an accelerator opening degree;
FIG 13 is a view showing an example of the drive-mode switching map to be used for controlling switching of the drive mode, wherein this example is to be used in the charged-power maintaining driving, and wherein the drive power (shown in FIG 11) is replaced by the accelerator opening degree;
FIG 14 is a flow chart showing main parts of control operation of an electronic control apparatus, namely, a control routine executed by the electronic control apparatus, for establishing various modes as the drive mode of the vehicle when the vehicle is caused to run with the engine being operated;
FIG 15 is a time chart in a case in which the control routine shown in the flow chart of FIG 14 is executed;
FIG 16 is a view showing, by way of example, a relationship between a second electric motor speed and a maximum possible torque;
FIG 17 is a collinear diagram for explaining fourth HEV mode in which the engine is driven and rotated, each of the first and third electric motors is caused to generate a positive torque and the second electric motor is caused to generate a reaction torque;
FIG 18 is a flow chart showing main parts of control operation of the electronic control apparatus, namely, a control routine executed by the electronic control apparatus, when the vehicle is in a predetermine driving state;
FIG 19 is a time chart in a case in which the control routine shown in the flow chart of FIG 18 is executed;
FIG 20 is a view schematically showing a construction of a vehicle provided with a vehicle drive apparatus (single pinion _U/D type) to which the present invention is applied, wherein the vehicle and the vehicle drive apparatus are other than those shown in FIG 1;
FIG 21 is a view showing a construction of the vehicle drive apparatus shown in FIG 20, by using a collinear diagram;
FIG 22 is a collinear diagram for explaining the fourth HEV mode in which the engine is driven and rotated, each of the first and third electric motors is caused to generate the positive torque and the second electric motor is caused to generate the reaction torque;
FIG 23 is a flow chart showing main parts of control operation of the electronic control apparatus, namely, a control routine executed by the electronic control apparatus, when the vehicle is in the predetermine driving state;
FIG 24 is a time chart in a case in which the control routine shown in the flow chart of FIG 23 is executed;
FIG 25 is a view schematically showing a construction of a vehicle provided with a vehicle drive apparatus (double pinion_U/D type) to which the present invention is applied, wherein the vehicle and the vehicle drive apparatus are other than those shown in FIG 1;
FIG 26 is a view showing a construction of the vehicle drive apparatus shown in FIG 25, by using a collinear diagram;
FIG 27 is a collinear diagram for explaining the fourth HEV mode in which the engine is driven and rotated, each of the first and third electric motors is caused to generate the positive torque and the second electric motor is caused to generate the reaction torque;
FIG 28 is a view schematically showing a construction of a vehicle provided with a vehicle drive apparatus (double pinion_U/D type) to which the present invention is applied, wherein the vehicle and the vehicle drive apparatus are other than those shown in FIG 1;
FIG 29 is a view showing a construction of the vehicle drive apparatus shown in FIG 28, by using a collinear diagram; and
FIG 30 is a collinear diagram for explaining the fourth HEV mode in which the engine is driven and rotated, each of the first and third electric motors is caused to generate the positive torque and the second electric motor is caused to generate the reaction torque.

### DETAILED DESCRIPTION OF PREFERRED EMBODIMENTS

Hereinafter, embodiments of the invention will be described in detail with reference to the accompanying drawings.

### FIRST EMBODIMENT

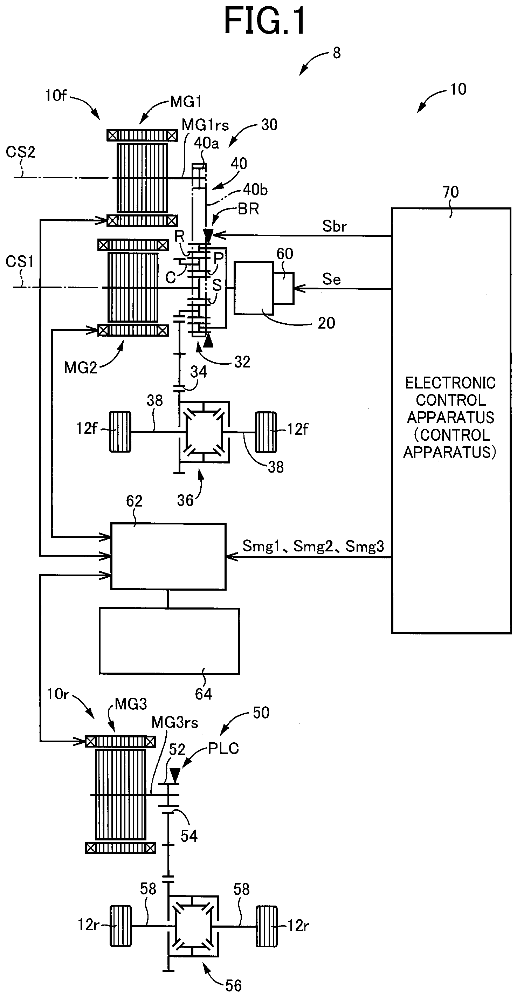

FIG 1 is a view schematically showing a construction of a vehicle 8 provided with a vehicle drive apparatus 10 to which the present invention is applied. As shown in FIG 1, the vehicle 8 includes drive wheels 12 and a vehicle drive apparatus 10. The drive wheels 12 consist of front right and left wheels 12f and rear right and left wheels 12r. The vehicle drive apparatus 10 includes a front drive portion 10f for driving the front wheels 12f and a rear drive portion 10r for driving the rear wheels 12r. It is noted that the above "right and left" refers to right and left relative to a forward direction of vehicle 8.

The front drive portion 10f includes an engine 20, a first electric motor MG1, a second electric motor MG2 and a front power transmission device 30. The rear drive portion 10r includes a third electric motor MG3 and a rear power transmission device 50. The vehicle 8 is a hybrid vehicle (HEV (hybrid electric vehicle)) or a plug-in hybrid vehicle (PHEV (plug-in hybrid electric vehicle)), and is an all-wheel drive vehicle in which the front wheels 12f and the rear wheels 12r are can be driven independent from one another. All wheel drive (AWD) and four wheel drive (4WD) are synonymous to each other. The vehicle drive apparatus 10 is capable of performing a front wheel drive for transmitting a torque to only the front wheels 12f, and also a rear wheel drive for transmitting the torque to only the rear wheels 12r.

The engine 20 is a known internal combustion engine, for example. An engine torque Te, which is the torque of the engine 20, is controlled with an engine control device 60 being controlled by an electronic control apparatus 70 that corresponds to "control apparatus" recited in appended claims. The engine control device 60 is provided in the front drive portion 10f, and includes a throttle actuator, a fuel injection device and a fuel ignition device.

Each of the first electric motor MG1, second electric motor MG2 and third electric motor MG3 is a so-called motor generator, i.e., a rotary electric machine having a function serving as a prime mover configured to generate a mechanical power from an electric power and also a function serving as an electric generator configured to generate the electric power from the mechanical power. For example, each of the first electric motor MG1, second electric motor MG2 and third electric motor MG3 is a synchronous electric motor in which a rotor is rotated by a rotational magnetic field generated by a stator. The rotational magnetic field is generated when alternating currents of multiple phases with different phases are applied to stator coils in the stator. The first electric motor MG1, second electric motor MG2 and third electric motor MG3 are connected to a battery 64 provided in the vehicle drive apparatus 10, through an inverter 62 that is also provided in the vehicle drive apparatus 10. The torque of each of the first electric motor MG1, second electric motor MG2 and third electric motor MG3 is controlled with the inverter 62 being controlled by the electronic control apparatus 70. The torque of the first electric motor MG1, the torque of the second electric motor MG2 and the torque of the third electric motor MG3 will be referred to as "first electric motor torque Tmg1", "second electric motor torque Tmg2" and "third electric motor torque Tmg3", respectively. The torque of each electric motor serves as a power driving torque when the electric motor functions as the prime mover, and serves as a regenerative torque when the electric motor functions as the electric generator. The battery 64 is an electric-power storage device configured to supply and receive the electric power to and from the first electric motor MG1, second electric motor MG2 and third electric motor MG3. Unless otherwise specified, the first electric motor MG1, second electric motor MG2 and third electric motor MG3 are controlled through the inverter 62 such that the electric power is supplied and received to and from all of them simultaneously. The term "simultaneously" means that the first electric motor MG1, second electric motor MG2 and third electric motor MG3 are placed in power-driving or regeneration enabling states independently at the same time. The electric power is generated by one of the first, second and third electric motors MG1, MG2, MG3, and the generated electric power is supplied to another one of the first, second and third electric motors MG1, MG2, MG3 that is to consume the supplied electric power by being driven, whereby an electric power balance is made.

The front power transmission device 30 is provided in a power transmission path between the front wheels 12f and the power sources (i.e., the engine 20, first electric motor MG1 and second electric motor MG2). The front power transmission device 30 includes a differential mechanism 32, a front counter gear 34, a front differential gear device 36 and right and left front drive shafts 38. The differential mechanism 32 and the front differential gear device 36 are connected to each other through the front counter gear 34. The front drive shafts 38 are connected to the front differential gear device 36. The front power transmission device 30 is configured to transmit the powers of the engine 20 and the second electric motor MG2, for example, to the front wheels 12f. Each of the front drive shafts 38 corresponds to "first drive shaft" which is recited in the appended claims and which is provided to drive the front wheel 12f as one of the front and rear wheels 12f, 12r.

The differential mechanism 32 is a single-pinion-type planetary gear device including a sun gear S, pinion gears P, a carrier C supporting the pinion gears P, and a ring gear R meshing with the sun gear S through the pinion gears P, such that each of the pinion gears P is rotatable about its axis and revolvable about a first axis CS1. The sun gear S is connected to the second electric motor MG2. The ring gear R is connected to the engine 20 and the first electric motor MG1. The carrier C meshes with the front counter gear 34, and is connected to the front drive shafts 38.

The engine 20 and the second electric motor MG2 are disposed on the first axis CS1 that is a rotation axis of the differential mechanism 32. The first electric motor MG1 is disposed on the second axis CS2. The second axis CS2 is a rotation axis other than the first axis CS1, and is parallel with the first axis CS1. The front power transmission device 30 further includes a power transmission mechanism 40. The first electric motor MG1 is connected to the ring gear R of the differential mechanism 32 through the power transmission mechanism 40. The power transmission mechanism 40 includes an intermediate gear 40a and a belt 40b. The intermediate gear 40a is fixed to, for example, a rotor shaft MG1rs of the first electric motor MG1 such that the intermediate gear 40a is unrotatable relative to the rotor shaft MG1rs. The belt 40b is provided to connect between the intermediate gear 40a and the ring gear R. The intermediate gear 40a has a smaller diameter than that of the ring gear R, so that the power transmission mechanism 40 serves as a reduction mechanism, for example. With the first electric motor MG1 being disposed on the second axis CS2, the front drive portion 10f has a smaller size than a case in which the first electric motor MG1 is disposed on the first axis CS1.

The front power transmission device 30 further includes a brake BR that is connected at an end portion thereof to the ring gear R of the differential mechanism 32 and is connected at another end portion thereof to a non-rotatable member (not shown). The non-rotatable member, to which the brake BR is connected, is, for example, a casing that houses the front power transmission device 30 and other devices or members. The brake BR is an engagement device that is to be operated by a hydraulically or electrically operation actuator, for example, and each of the opposite end portions is to be selectively connected and disconnected. The brake BR serves as a brake mechanism configured to selectively stop rotation of the ring gear R of the differential mechanism 32, so that the ring gear R is to be selectively rotatable and unrotatable by operation of the brake BR.

The rear power transmission device 50 is provided in a power transmission path between the third electric motor MG3 and the rear wheels 12r. The rear power transmission device 50 includes an output gear 52, a rear counter gear 54, a rear differential gear device 56 and right and left rear drive shafts 58. The output gear 52 meshes with the rear counter gear 54, and is fixedly disposed on a rotor shaft MG3rs of the third electric motor MG3 such that the output gear 52 is unrotatable relative to the rotor shaft MG3rs. The output gear 52 and the rear differential gear device 56 are connected to each other through the rear counter gear 54. The rear drive shafts 58 are connected to the rear differential gear device 56. The output gear 52 has a smaller diameter than that of the rear counter gear 54, so that the output gear 52 and the rear counter gear 54 cooperate with each other to constitute a reduction mechanism, for example. The rear power transmission device 50 configured to transmit the power of the third electric motor MG3 to the rear wheels 12r. Each of the rear drive shafts 58 corresponds to "second drive shaft" which is recited in the appended claims and which is provided to drive the rear wheel 12r as the other of the front and rear wheels 12f, 12r. The third electric motor MG3 is connected to the rear drive shafts 58.

The rear power transmission device 50 further includes a parking mechanism PLC. The parking mechanism PLC has an end portion connected to a non-rotatable member (not shown). The parking mechanism PLC is operated by, for example, an electrically-operated actuator or a manually-operated mechanical actuator, and has another end portion that is to be engaged with or disengaged from the output gear 52 by operation of the actuator. The non-rotatable member to which the parking mechanism PLC is connected is, for example, a casing that houses the rear power transmission device 50 and other devices and members. The parking mechanism PLC is a known parking lock device that switches between a parking lock state in which the output gear 52 is mechanically fixed so as to be unrotatable and a non-parking lock state in which the output gear 52 is rotatable. The output gear 52 is a rotary member that is to be rotated together with the rear drive shafts 58. The output gear 52 and rear drive shafts 58 are selectively rotatable and unrotatable by operation of the parking mechanism PLC.

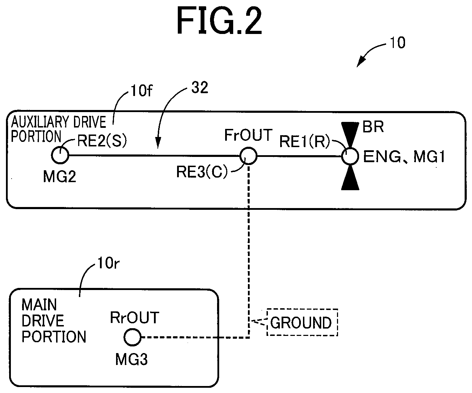

FIG 2 is a view showing a construction of the vehicle drive apparatus 10, by using a collinear diagram. The rear drive portion 10r is a main drive portion to be used for driving in preference to the front drive portion 10f, for example. Thus, the front drive portion 10f is to be used as an auxiliary drive portion. In FIG 2, "FrOUT" represents the front wheels 12f, and "RrOUT" represents the rear wheels 12r.

The differential mechanism 32 of the front drive portion 10f includes three rotary elements consisting of a first rotary element RE1, a second rotary element RE2 and a third rotary element RE3. Each of the rotary elements RE1-RE3 of the differential mechanism 32 is connected to an actuator. The collinear diagram of FIG 2 shows the three rotary elements of the differential mechanism 32 arranged in a straight line. Expressing using the collinear diagram, the first rotary element RE1 is the ring gear R. The first rotary element RE1 is connected to the engine 20 and the first electric motor MG1. The second rotary element RE2 is the sun gear S. The second rotary element RE2 is connected to the second electric motor MG2. The third rotary element RE3 is the carrier C. The third rotary element RE3 is connected to the front drive shafts 38, i.e., the front wheels 12f. The brake BR is a brake mechanism that is configured to stop rotation of the first rotary element RE1 by being placed in an engaged state. The differential mechanism 32 is constructed such that the first, second and third rotary elements RE1, ,RE2, RE3 are to be rotated about a common axis in the form of the first axis CS1 about which the engine 20 is to be rotated, and such that the third rotary element RE3, which is connected to the first drive shaft 38, is to be rotated at a rotational speed that is intermediate between the rotational speed of the second rotary element RE2 and the rotational speed of the first rotary element RE1.

The third electric motor MG3 of the rear drive portion 10r is connected to rear wheels 12r, and can therefore be considered to be connected to the front wheels 12f through a ground (see dashed line in FIG 2). It is possible to drive the vehicle 8 with the third electric motor MG3 being considered to be connected to the front wheels 12f, since the first, second and third electric motors MG1, MG2, MG3 are controlled such that the electric power is transferred among the first, second and third electric motors MG1, MG2, MG3 simultaneously.

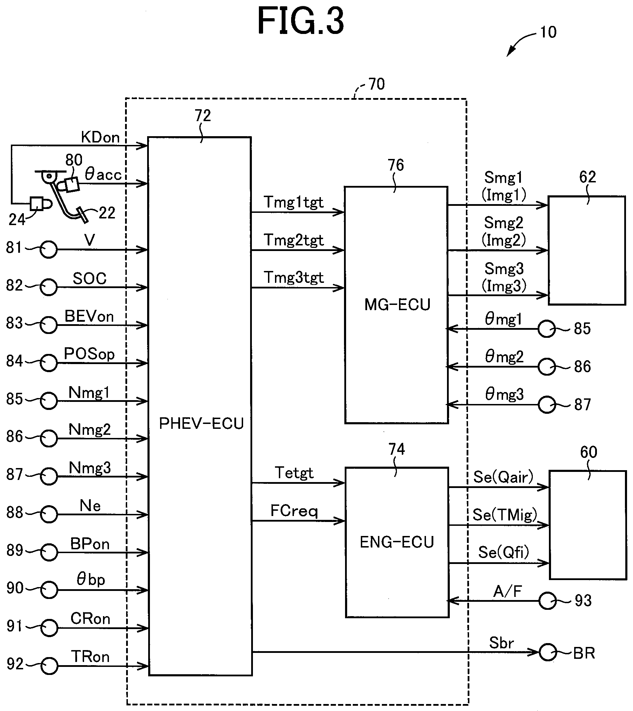

FIG 3 is a view showing main parts of a control system for various controls in the vehicle drive apparatus 10. As shown in FIGS. 1 and 3, the vehicle drive apparatus 10 is provided with the electronic control apparatus 70 as a controller including a processor that is configured to control the vehicle drive apparatus 10, for example. The electronic control apparatus 70 includes a so-called microcomputer incorporating a CPU, a ROM, a RAM and an input-output interface. The CPU performs various control operations of the vehicle 8, by processing various input signals, according to control programs stored in the ROM, while utilizing a temporary data storage function of the RAM. For example, the electronic control apparatus 70 controls outputs of the engine 20, the first electric motor MG1, the second electric motor MG2 and the third electric motor MG3, and also controls switching of a drive mode of the vehicle 8, which will be described later. The electronic control apparatus 70 is sectioned into a plurality of ECUs, as needed, which include a hybrid control ECU 72 (see "PHEV-ECU" shown in FIG 3), an engine control ECU 74 (see "ENG-ECU" shown in FIG 3) and an electric-motor control ECU 76 (see "MG-ECU " shown in FIG 3).

The hybrid control ECU 72 receives various input signals based on values detected by respective sensors provided in the vehicle 8. Specifically, the hybrid control ECU 72 receives: an output signal of an accelerator-opening degree sensor 80 indicative of an accelerator opening degree (accelerator operation degree) θacc; an output signal of a vehicle speed sensor 81 indicative a running speed V of the vehicle 8, an output signal of a battery sensor 82 indicative of a charged amount (state of charge) SOC; a BEV ON signal BEVon as an output signal of a BEV switch 83; an output signal of a shift position sensor 84 indicative of a shift operation position POSop; an output signal of a first-electric-motor speed sensor 85 indicative of a first electric motor speed Nmg1; an output signal of a second-electric-motor speed sensor 86 indicative of a second electric motor speed Nmg2; an output signal of a third-electric-motor speed sensor 87 indicative of a third electric motor speed Nmg3; an output signal of an engine speed sensor 88 indicative of an engine speed Ne; a brake ON signal BPon as an output signal of a brake switch 89; an output signal of a brake operation sensor 90 indicative of a brake operation amount θbp; a crawl ON signal CRon as an output signal of a crawl switch 91; a towing ON signal TRon as an output signal of a towing switch 92; and a kickdown ON signal KDon as an output signal of a kickdown switch 24.

The BEV switch 83 is a switch to be operated by a driver of the vehicle 8 when the drive requires a BEV (battery electric vehicle) driving of the vehicle 8. When the BEV switch 83 is operated, the BEV driving is performed with only the power of the battery 64 without the engine 20 being started. Each of the motor speed sensors 85, 86, 87 is constituted by a resolver, for example. The crawl switch 91 is a switch to be operated by the driver to request a crawl control to be executed when a stage is anticipated in which the vehicle 8 runs at a very low speed with a high load on a rocky road, for example. The towing switch 92 is a switch to be operated by the driver when the vehicle 8 runs with a towed vehicle connected to a rear portion of the vehicle. The kickdown switch 24 is a switch configured to detect that an amount of depressing operation of the accelerator pedal 22 made by the driver is at or near its maximum value.

The accelerator opening degree θacc is an amount of accelerating operation made by the driver, which represents a magnitude of the accelerating operation made by the driver. The running speed V is a running speed of the vehicle 8. The charged amount SOC is represented by a battery charge/discharge current and/or a battery voltage, for example, detected by the battery sensor 82. The charged amount SOC is a remaining charge of the battery 64, and is calculated by the electronic control apparatus 70, based on the battery charge/discharge current and/or the battery voltage detected by the battery sensor 82. The battery sensor 82 also detects a temperature of the battery 64. The BEV ON signal BEVon is a signal indicating that the BEV switch 83 has been operated by the driver. The shift operation position POSop represents which one of lever positions such as "P", "R", "N", "D" a shift lever of a shift operation device is currently placed in. The first electric motor speed Nmg1 is a rotational speed of the first electric motor MG1. The second electric motor speed Nmg2 is a rotational speed of the second electric motor MG2. The third electric motor speed Nmg3 is a rotational speed of the third electric motor MG3. The engine rotational speed Ne is a rotational speed of engine 20. The brake ON signal BPon is a signal that indicates a state in which a brake pedal is being operated by the driver for activating wheel brakes. The brake operation amount θbp is a signal that indicates a magnitude of brake-pedal depression operation made by the driver, i.e., a magnitude of brake operation made by the driver, and is synonymous with a brake pedal depression force. The crawl ON signal CRo is a signal that indicates that crawl switch 91 has been operated by the driver. The towing ON signal TRo is a signal that indicates that the towing switch 92 has been operated by the driver. The kickdown ON signal KDon is a signal that indicates that the amount of depressing operation of the accelerator pedal 22 made by the driver is at or near its maximum value. With the accelerator pedal 22 being strongly depressed, the kickdown switch 24 is turned ON whereby the kickdown ON signal KDon is placed in its ON state. The depressing operation of the accelerator pedal 22 by the driver, which places the kickdown ON signal KDon into the ON state, corresponds to "operation that is made by a driver of the vehicle to increase a drive power", which is recited in the appended claims.

The engine control ECU 74 and the electric-motor control ECU 76 also receive various input signals based on values detected by respective sensors provided in the vehicle 8. Specifically, the engine control ECU 74 receives an output signal of an air-fuel ratio sensor 93 indicative of an air-fuel ratio A/F, for example. The electric-motor control ECU 76 receives an output signal of the first-electric-motor speed sensor 85 indicative of a first-electric-motor rotational angle θmg1, an output signal of the second-electric-motor speed sensor 86 indicative of a second-electric-motor rotational angle θmg2 and an output signal of the third-electric-motor speed sensor 87 indicative of a third-electric-motor rotational angle θmg3.

The air-fuel ratio A/F indicates the air-fuel ratio in an exhaust gas. The first-electric-motor rotational angle θmg1 indicates a rotational angle of a rotor of the first electric motor MG1, from a predetermined reference position. The second-electric-motor rotational angle θmg2 indicates a rotational angle of a rotor of the second electric motor MG2, from a predetermined reference position. The third-electric-motor rotational angle θmg3 is indicates a rotational angle of a rotor of the third electric motor MG3, from a predetermined reference position.

The hybrid control ECU 72 outputs various command signals supplied to the engine control ECU 74. The various command signals supplied to the engine control ECU 74 include a command signal indicative of a target engine torque Tetgt and a fuel-cut request signal FCreq requesting a fuel cut operation. The hybrid control ECU 72 outputs various command signals supplied to the electric-motor control ECU 76. The various command signals supplied to the electric-motor control ECU 76 include a command signal indicative of a target first-electric -motor torque Tmg1tgt, a command signal indicative of a target second-electric-motor torque Tmg2tgt and a command signal indicative of a target third-electric-motor torque Tmg3tgt. Further, the hybrid control ECU 72 outputs a command signal such as a brake-control command signal Sbr that is supplied to the brake BR, for example.

The target engine torque Tetgt is a target value of the engine torque Te. The fuel cut operation is a control operation for cutting off supply of fuel to the engine 20. The target first-electric-motor torque Tmg1tgt is a target value of the first electric motor torque Tmg1. The target second-electric-motor torque Tmg2tgt is a target value of the second electric motor torque Tmg2. The target third-electric-motor torque Tmg3tgt is a target value of the third electric motor torque Tmg3. The brake-control command signal Sbr is a request signal for controlling the brake BR to its ON state or OFF state. It is noted that, in the engagement device, the ON state is synonymous with the engaged state (= connecting state), and the OFF state is synonymous with the released state (= disconnecting state).

The engine control ECU 74 outputs an engine-control command signal Se supplied to the engine control device 60, for example. The engine-control command signal Se is a command signal for controlling the engine 20, and includes control signals for controlling an intake air quantity Qair, an ignition timing TMig and a fuel injection quantity Qfi.

The electric-motor control ECU 76 outputs a first-electric-motor-control command signal Smg1, a second-electric-motor-control command signal Smg2 and a third-electric-motor-control command signal Smg3 that are supplied to the inverter 62, for example. The first-electric-motor-control command signal Smg1 is a command signal for controlling the first electric motor MG1, and includes a control signal for controlling a first electric motor current Img1. The second-electric-motor-control command signal Smg2 is a command signal for controlling the second electric motor MG2, and includes a control signal for controlling a second electric motor current Img2. The third-electric-motor-control command signal Smg3 is a command signal for controlling the third electric motor MG3, and includes a control signal for controlling a third electric motor current Img2. The first electric motor current Img1 is an electric current for driving the first electric motor MG1. The second electric motor current Img2 is an electric current for driving the second electric motor MG2. The third electric motor current Img3 is an electric current for driving the third electric motor MG3.

The hybrid control ECU 72 determines the various command signals, based on intentions of the driver represented by the accelerator opening degree θacc and the brake operation amount θbp, and also the first electric motor speed Nmg1, the second electric motor speed Nmg2, the third electric motor speed Nmg3 and the engine rotational speed Ne, for example. Specifically, the hybrid control ECU 72 determines the brake-control command signal Sbr, and controls an operation state of the brake BR so as to place the brake BR into the engaged state or the released state. The engine control ECU 74 determines the engine-control command signal Se, based on the command signal representing the target engine torque Tetgt and the fuel-cut request signal FCreq requesting the fuel cut operation. The engine control ECU 74 controls the engine 20 by outputting the engine-control command signal Se. The electric-motor control ECU 76 determines the first, second and third electric-motor-control command signals Smg1, Smg2, Smg3, based on the target first-electric-motor torque Tmg1tgt, the target second-electric-motor torque Tmg2tgt and the target third-electric-motor torque Tmg3tgt. The electric-motor control ECU 76 outputs the first, second and third electric-motor-control command signals Smg1, Smg2, Smg3, and controls the first, second and third electric motors MG1, MG2, MG3.

Thus, the electronic control apparatus 70 is configured to control the engine 20 and the first through third electric motors MG1, MG2, MG3, and to place the drive mode of the vehicle 8 into a selected one of a plurality of modes. Further, the electronic control apparatus 70 controls the brake BG such that the brake BG is placed in the engaged state, as needed, upon switching of the drive mode.

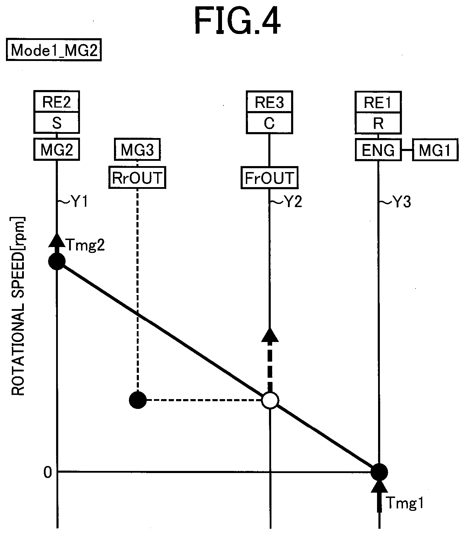

The plurality of modes into which the drive mode of the vehicle 8 can be placed, will be described with reference to FIGS. 4-9. Each of FIGS. 4-9 shows relative rotational speeds of the rotary elements RE1-RE3 of the differential mechanism 32 in the collinear diagram of FIG 2. In collinear diagram of each of FIGS. 4-9, vertical lines Y1-Y3 are arranged in this order as seen from a left side in each of FIGS. 4-9. The vertical line Y1 represents the rotational speed of the sun gear S as the second rotary element RE2 to which the second electric motor MG2 is connected. The vertical line Y2 represents the rotational speed of the carrier C as the third rotary element RE3 to which the front wheels 12f (see "FrOUT" in each of FIGS. 4-9) are connected. The vertical line Y3 represents the rotational speed of the ring gear R as the first rotary element RE1 to which the engine 20 (see "ENG" in each of FIGS. 4-9) and the first electric motor MG1 are connected. Each of FIGS. 4-9 also shows that the third electric motor MG3 connected to the rear wheels 12r (see "RrOUT" in each of FIGS. 4-9) is connected to the front wheels 12f through the ground. Further, each arrow shows the magnitude and direction of the torque converted onto an axis of a corresponding one of the rotary element RE1-RE3, and each solid arrow shows the torque outputted by the corresponding actuator while dashed arrow shows the torque transmitted mechanically.

FIG 4 is a collinear diagram for explaining Mode1_MG2, i.e., BEV mode as one of kinds of the Mode1 enabling the BEV driving, in which each of the first and second electric motors MG1, MG2 is caused to generate the torque. The Mode1_MG2 is one of the plurality of modes into which the drive mode of the vehicle 8 can be placed. In the Mode1_MG2, the BEV driving is performed, with each of the first and second electric motors MG1, MG2 being caused to generate the torque, and with the engine 20 being stopped. In the Mode1_MG2, each of the first and second electric motors MG1, MG2 supplies and receives the electric power to and from the battery 64, generating the torque, such that a moment around the third rotary element RE3 becomes zero thereby enabling the BEV driving. In this instance, the first electric motor torque Tmg1 is controlled such that drag of engine 20 does not occur, namely, such that the rotational speed of the first rotary element RE1 becomes zero. In the Mode1_MG2, the differential mechanism 32 is in a differential state, and the torque is generated from each of the first and second electric motors MG1, MG2, whereby the torque is mechanically transmitted to the third rotary element RE3 as an output element. It is noted that, in the Mode1_MG2, it is also possible to increase the drive torque by causing the third electric motor MG3 to generate the torque.

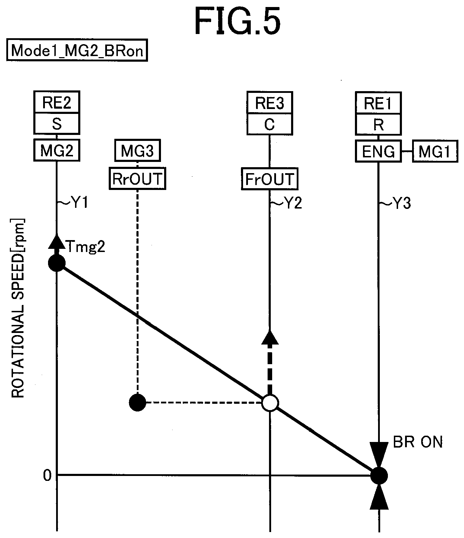

FIG 5 is a collinear diagram for explaining Mode1_MG2_BRon, i.e., BEV mode as another one of kinds of the Mode1 enabling the BEV driving, in which the second electric motor MG2 is caused to generate the torque, with the brake BR being in the engaged state. The Model_MG2_BRon is one of the plurality of modes into which the drive mode of the vehicle 8 can be placed. In the Mode1_MG2 _BRon, the BEV driving is performed, with the second electric motor MG2 being caused to generate the torque, with the brake BR being in the engaged state, and with the engine 20 being stopped. In the Mode1_MG2_BRon, the brake BR is placed in the engaged state whereby the rotational speed of the first rotary element RE1 is fixed to zero, so that the BEV driving in either forward or reverse direction is enabled by the second electric motor MG2 with the electric power supplied from the battery 64 without the first electric motor MG1 being caused to generate the torque. In this instance, the BEV driving is enabled with a maximum torque of the second electric motor MG2. In the Mode1_MG2 _BRon, the differential mechanism 32 is in the differential state, and the torque is generated from the second electric motor MG2, whereby the torque is mechanically transmitted to the third rotary element RE3 as the output element. It is noted that, in the Mode1_MG2_BRon, it is also possible to increase the drive torque by causing the third electric motor MG3 to generate the torque.

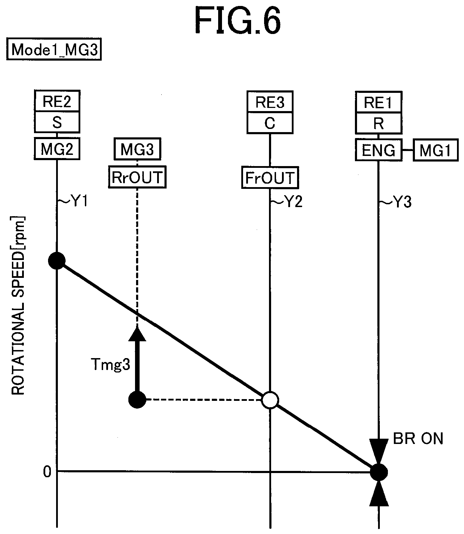

FIG 6 is a collinear diagram for explaining Mode1_MG3, i.e., BEV mode as still another one of kinds of the Mode1 enabling the BEV driving, in which the third electric motor MG3 is caused to generate the torque, with the brake BR being in the engaged state. The Mode1_MG3 is one of the plurality of modes into which the drive mode of the vehicle 8 can be placed. In the Mode1_MG3, the BEV driving is performed, with the third electric motor MG3 being caused to generate the torque, with the brake BR being in the engaged state, and with the engine 20 being stopped. In the Mode1_MG3, the brake BR is placed in the engaged state whereby the rotational speed of the first rotary element RE1 is fixed to zero, so that the BEV driving in either forward or reverse direction is enabled by the third electric motor MG3 with the electric power supplied from the battery 64 without the engine 20 and the first electric motor MG1 being dragged.

It is noted that, in the Mode1_MG3, it is also possible to increase the drive torque by causing the second electric motor MG2 to generate the torque. Further, in the Mode1_MG3, the BEV driving can be performed also by causing the third electric motor MG3 to generate the torque, even without the brake BR being placed in the engaged state. That is, the Mode1_MG3 may be also a mode in which the BEV driving is performed with the third electric motor MG3 being caused to generate the torque and with the engine 20 being stopped.

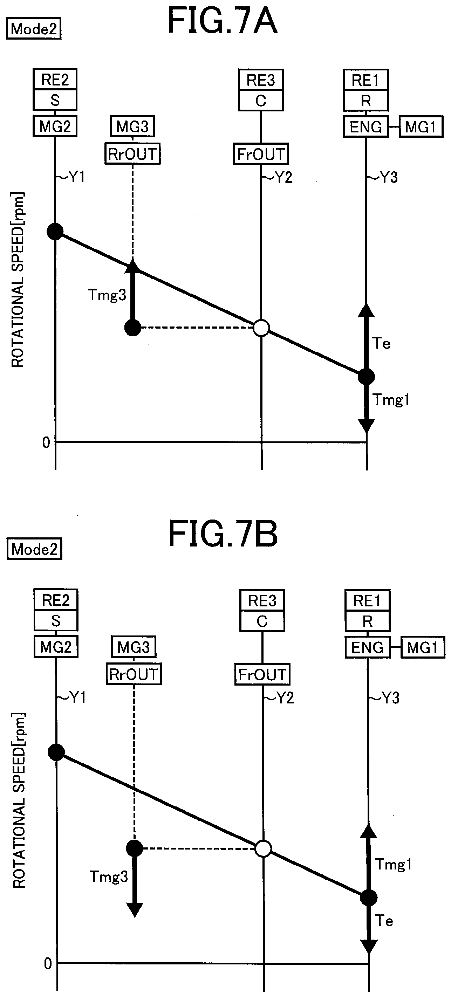

FIGS. 7A and 7B are collinear diagrams for explaining first HEV mode, i.e., Mode2 in which the engine 20 is driven and rotated , and the electric power is transferred between the first and third electric motors MG1, MG2, wherein FIG 7A shows a case in which the third electric motor MG3 is caused to generate the torque by the electric power generated by the first electric motor MG1, and FIG 7B shows a case in which an engine brake is generated by a power driving of the first electric motor MG1 that consumes the electric power generated by the third electric motor MG3.
The Mode2 is one of the plurality of modes into which the drive mode of the vehicle 8 can be placed. The Mode2 is a mode enabling a hybrid driving, i.e., HEV driving, and is a series mode enabling a series driving with the engine 20 as the power source.

In the case shown in FIG 7A, the Mode2 includes a mode in which the first electric motor MG1 is operated as the electric generator by operation of the engine 20, and the third electric motor MG3 is operated as the prime mover by the electric power generated by the first electric motor MG1. The Mode2 is a mode that can realize an electric-continuously-variable transmission function that performs a series mode operation in which the power inputted by the engine 20 is outputted to the rear wheels 12r with the brake BR being placed in the released state. In the Mode2, a power conversion is made between the engine 20 and the first electric motor MG1, and between the first electric motor MG1 and the third electric motor MG3. The power conversion means a conversion between the mechanical power and the electric power. In the Mode2, an explosive vibration torque of the engine 20 is not transmitted to the front drive shafts 38, so that the Mode2 is advantageous for suppressing NV. The term "NV" is a general term for noise and vibration such as muffled sound generated in the vehicle 8, and represents at least one of the noise and vibration in the vehicle 8. Therefore, the Mode2 is useful for use in a low running speed and low load range in which quietness is required. In addition, since the Mode2 is less subjected to restrictions such as the muffled sound when an operating point of engine 20 is to be set, it is possible to operate the engine 20 at an operating point at which a fuel efficiency is excellent.

In the case shown in FIG 7B, the Mode2 includes a mode in which the power driving of the first electric motor MG1 is performed with the electric power generated by the third electric motor MG3 that is operated as the electric generator, whereby the engine 20 is driven and rotated. In this Mode2, the electric power consumed by the power driving of the first electric motor MG1 is covered by the regenerative power of the third electric motor MG3, which is generated by a kinetic energy of the vehicle 8, and the engine rotational speed Ne is increased by the power driving of the first electric motor MG1. The engine 20 is in a fuel cut state, and the engine rotational speed Ne is increased by the first electric motor torque Tmg1, and the torque converted onto the axis of the first rotary element RE1 is considered to be a negative torque. Even where the engine 20 is operated with the fuel being injected thereto, if the engine rotational speed Ne is increased by the first electric motor torque Tmg1 to a higher speed vale than when the engine 20 is in an independent operating state, the torque converted onto the axis of the first rotary element RE1 is considered to be a negative torque. The positive direction of the torque is the direction of the torque in a case in which the engine 20 is operated. The case in which the engine 20 is operated is synonymous with a case in which the positive torque is generated by the engine 20 as such. In the Mode2 shown in FIG 7B, the power conversion is made between the kinetic energy of the vehicle 8 and the third electric motor MG3, and between the third electric motor MG3 and the first electric motor MG1. In this way, the engine brake can be applied in the Mode2. Where the engine brake is applied in the Mode2, too, the explosive vibration torque of the engine 20 is not transmitted to the front drive shafts 38, which is advantageous for suppressing the NV.

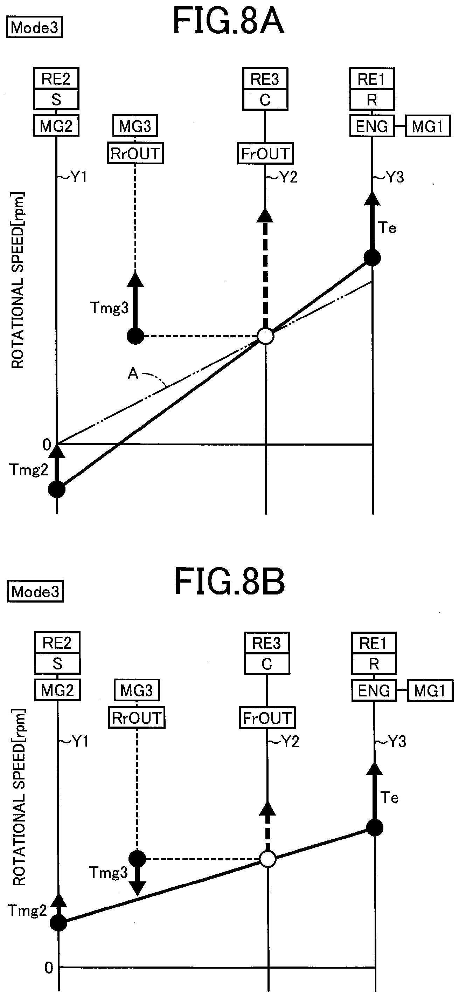

FIGS. 8A and 8B are collinear diagrams for explaining second HEV mode, i.e., Mode3 in which the engine 20 is operated whereby the electric power is transferred between the second and third electric motors MG2, MG3, wherein FIG 8A shows a case in which the third electric motor MG3 is caused to generate the torque by the electric power generated by the second electric motor MG2, and FIG 8B shows a case in which the second electric motor MG2 is caused to generate the torque by the electric power generated by the third electric motor MG3. The Mode3 is one of the plurality of modes into which the drive mode of the vehicle 8 can be placed. The Mode3 is a mode enabling the hybrid driving, i.e., HEV driving, and is an input split mode enabling an input split driving with the engine 20 as the power source. In the Mode3, the differential mechanism 32 is in the differential state, and a reaction force of the engine torque Te is taken by the second electric motor MG2, so that the torque is mechanically transmitted to the third rotary element RE3. The Mode3 is a mode that can realize the electric-continuously-variable transmission function that performs an input split mode operation in which the power inputted by the engine 20 is outputted to the front and rear wheels 12f, 12r with the brake BR being placed in the released state. In the Mode3, the engine brake can be applied. It is noted that the input split mode is a mode in which two electric motors (MG2, MG3) and an engine are connected to three rotary elements of a differential mechanism, and an electric motor (MG3) is placed on the output element (RE3), when expressed using a collinear diagram.

In FIG 8A, double-dashed line A in FIG 8A shows a state in which a mechanical point is created in the differential mechanism 32 in which no electrical work is made by setting the rotational speed of the second rotary element RE2 (second electric motor speed Nmg2) to zero so as to set the power of the second electric motor MG2 to zero. In the differential mechanism 32, the rotational speed of the third rotary element RE3 as the output element is set to a deceleration side, i.e., underdrive (U/D) side, relative to the engine rotational speed Ne at this mechanical point. That is, the mechanical point of the differential mechanism 32 is set by a reduction ratio. In FIGS. 8A and 8B, the Mode3 is the U/Dinput split mode.

In FIG 8A, the Mode3 includes at least a mode in which the engine 20 is operated whereby the second electric motor MG2 is operated as the electric generator, while the third electric motor MG3 is operated as the prime mover by the electric power generated by the second electric motor MG2. In the Mode3, the torque is mechanically transmitted to the third rotary element RE3, and the electric power generated by the second electric motor MG2 is supplied to the third electric motor MG3 whereby the torque is generated in the third electric motor MG3. In the Mode3, the power conversion is made between the engine 20 and the second electric motor MG2, and between the second electric motor MG2 and the third electric motor MG3. The Mode3 provides a high transmission efficiency in the low running speed and high load range, so that it is useful in the low running speed and high load range, for example.

In FIG 8B, the Mode3 may include a mode in which the engine 20 is operated while the second electric motor MG2 is operated as the prime mover using the electric power generated by the third electric motor MG3. In this Mode3, when the torque is mechanically transmitted to the third rotary element RE3, the second electric motor MG2 is rotated in the forward direction, so that the electric power consumed by the power driving of the second electric motor MG2 is covered by the regenerative power of the third electric motor MG3 using the kinetic energy of the vehicle 8. In the Mode3 shown in FIG 8B, the power conversion is made between the kinetic energy of the vehicle 8 and the third electric motor MG3, and between the third electric motor MG3 and the second electric motor MG2.

The vehicle drive apparatus 10 is controlled to perform the Mode3 shown in FIG 8A during a normal driving in which the drive mode is selected with an energy efficiency being prioritized. On the other hand, the vehicle drive apparatus 10 is controlled to perform the Mode3 shown in FIG 8B, when the drive mode is selected with a power performance being prioritized, without the Mode3 shown in FIG 8A being is not executed.

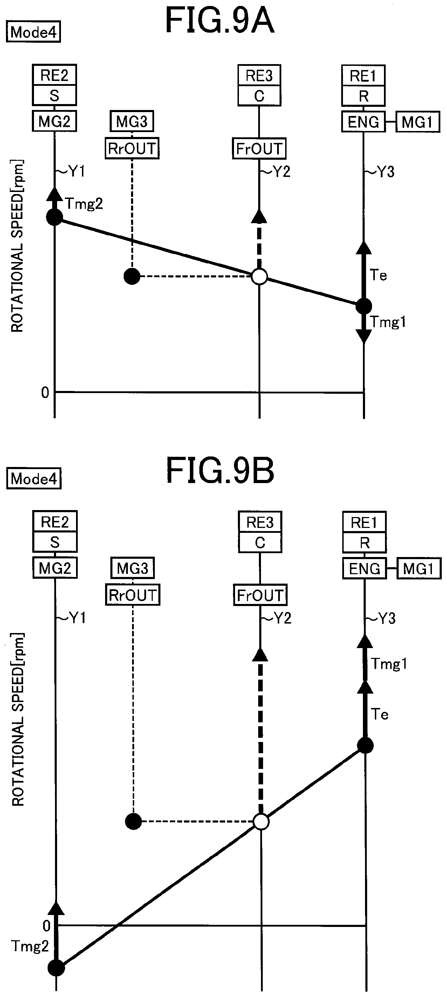

FIGS. 9A and 9B are collinear diagrams for explaining thid HEV mode, i.e., Mode4 in which the engine 20 is operated whereby the electric power is transferred between the first and second electric motors MG1, MG2, wherein FIG 9A shows a case in which the second electric motor MG2 is caused to generate the torque by the electric power generated by the first electric motor MG1, and FIG 9B shows a case in which the first electric motor MG1 is caused to generate the torque by the electric power generated by the second electric motor MG2. The Mode4 is one of the plurality of modes into which the drive mode of the vehicle 8 can be placed. The Mode4 is a mode enabling the hybrid driving, i.e., HEV driving, and is an output split mode enabling an output split driving with the engine 20 as the power source. In the Mode4, the differential mechanism 32 is in the differential state, and a reaction force of the engine torque Te is taken by the second electric motor MG2, so that the torque is mechanically transmitted to the third rotary element RE3. The Mode4 is a mode that can realize the electric-continuously-variable transmission function that performs an output split mode operation in which the power inputted by the engine 20 is outputted to the front wheels 12f with the brake BR being placed in the released state. In the Mode3, the engine brake can be applied. Since the mechanical point of the differential mechanism 32 is set by a reduction ratio, the Mode4 shown in FIGS. 9A and 9B is U/Doutput split mode. It is noted that the output split mode is a mode in which two electric motors (MG1, MG2) and an engine are connected to three rotary elements of a differential mechanism, and an electric motor (MG1) is placed on the input element (RE1) to which the engine is connected, when expressed using a collinear diagram.

In FIG 9A, the Mode4 includes at least a mode in which the engine 20 is operated whereby the first electric motor MG1 is operated as the electric generator, while the second electric motor MG2 is operated as the prime mover by the electric power generated by the first electric motor MG1. In Mode4, when the torque is mechanically transmitted to the third rotary element RE3, the second electric motor MG2 is rotated in the forward direction, so that the electric power consumed by the power driving of the second electric motor MG2 is covered by the electric power generated by the first electric motor MG1 using the power of the engine 20. In the Mode4, the power conversion is made between the engine 20 and the first electric motor MG1, and between the first electric motor MG1 and the second electric motor MG2. The Mode4 provides a high transmission efficiency in the high running speed range, so that it is useful in the high running speed range, for example.

In FIG 9B, the Mode4 may include a mode in which the engine 20 is operated while the first electric motor MG1 is operated as the prime mover using the electric power generated by the second electric motor MG2. In this Mode4, when the torque is mechanically transmitted to the third rotary element RE3, the second electric motor MG2 is rotated in the reverse direction, so that the electric power generated by the second electric motor MG2 is supplied to the first electric motor MG1 whereby the torque is generated in the first electric motor MG1. In the Mode4 shown in FIG 9B, the power conversion is made between the engine 20 and the second electric motor MG2, and between the second electric motor MG2 and the first electric motor MG1.

The vehicle drive apparatus 10 is controlled to perform the Mode4 shown in FIG 9A during the normal driving in which the drive mode is selected with the energy efficiency being prioritized. On the other hand, the vehicle drive apparatus 10 is controlled to perform the Mode4 shown in FIG 9B, when the drive mode is selected with a power performance being prioritized, without the Mode4 shown in FIG 9A being is not executed.

The electronic control apparatus 70 is configured to switch the drive mode of the vehicle 8, based on the running speed V and a driving load. The driving load is represented by the accelerator opening degree θacc, or represented by an actual value of a drive power Fr or a required value of the drive power Fr based on the accelerator opening degree θacc and the running speed V, for example. In the low running speed and low load range, the first HEV mode, i.e., the Mode2 (see FIGS. 7A and 7B) is established as the drive mode. In the low running speed and high load range, the second HEV mode, i.e., the Mode3 (see FIGS. 8A and 8B) is established as the drive mode. In the high running speed range, the third HEV mode, i.e., the Mode4 (see FIGS. 9A and 9B) is established as the drive mode.

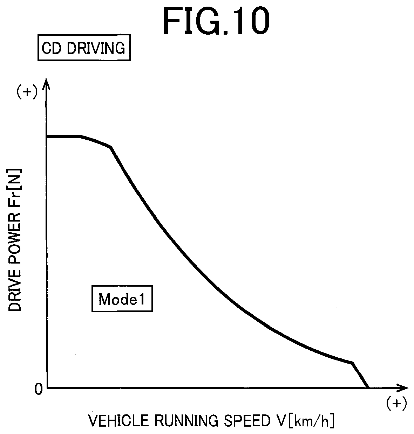

FIGS. 10-13 are views showing examples of a drive-mode switching map used for a control for switching the drive mode of the vehicle 8. The drive-mode switching map represents a predetermined relationship on a two-dimensional coordinate system with its horizontal axis indicative of the running speed V and with its vertical axis indicative of the driving load, wherein boundaries define areas that correspond to the respective modes. In other words, the drive-mode switching maps represent the predetermined relationship for determining which one of the modes the drive mode of the vehicle 8 is to be placed in.

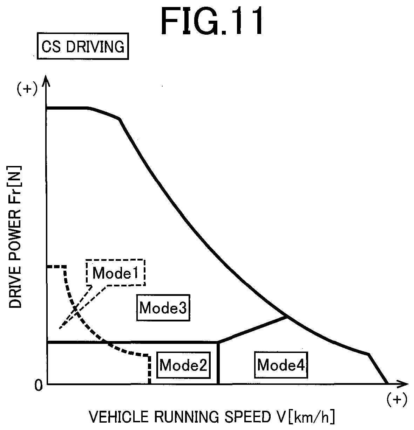

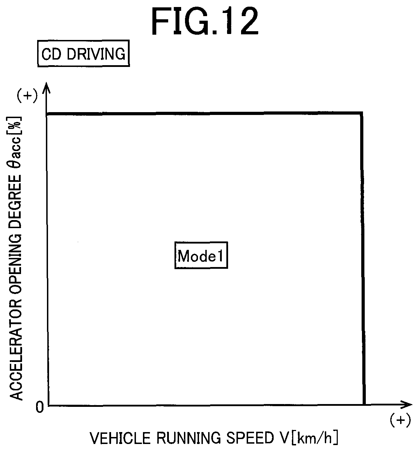

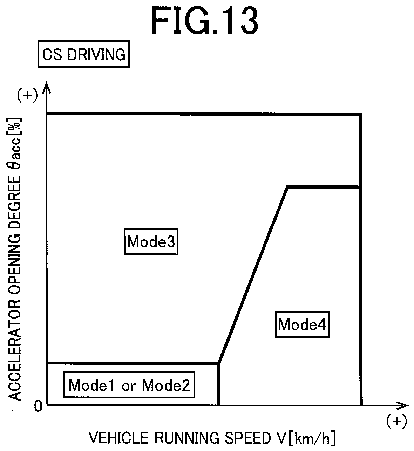

Each of FIGS. 10 and 11 shows a case in which the driving load is set to the drive power Fr, and each of FIGS. 12 and 13 shows a case in which the driving load is set to the accelerator opening degree θacc. FIG 12 shows the case in which the drive power Fr in FIG 10 is replaced with the accelerator opening degree θacc, and FIG 13 shows the case in which the drive power Fr in FIG 11 is replaced with the accelerator opening degree θacc. Each of FIGS. 10 and 12 shows the drive-mode switching map used in CD (charge depleting) driving in which the driving of the vehicle 8 is performed while the charged amount SOC is consumed. Each of FIGS. 11 and 13 shows the drive-mode switching map used in the CS (charge sustain) driving in which the driving of the vehicle 8 is performed while the charged amount SOC is maintained.

The drive-mode switching map shown in each of FIG 10 and FIG 12 is used, for example, in the PHEV (plug-in hybrid electric vehicle) equipped with the battery 64 having a relatively large capacity, when CD mode for CD driving, i.e., a charged-power consuming driving, is set. The drive-mode switching map shown in each of FIG 10 and FIG 12 may not be used in the HEV (hybrid electric vehicle) equipped with the battery 64 having a capacity smaller than that of the PHEV. The drive-mode switching map shown in each of FIG 11 and FIG 13 is used, for example, in the PHEV, when CS mode for CS driving, i.e., charged-power maintaining driving, is set. Alternatively, the drive-mode switching map shown in each of FIG 11 and FIG 13 is used, for example, in the HEV.

When the CD mode is set and the charged amount SOC is sufficiently large, the drive-mode switching map shown in FIG 10 or FIG 12 is selected, so that the Mode1 is set in an entire range. When the CD mode is set but the charged amount SOC is small, or when the CS mode is set, the drive-mode switching map shown in FIG 11 or FIG 13 is selected. In the drive-mode switching map shown in FIG 11 or FIG 13, the Mode2 is set in the low running speed and low load range in which the muffled sound is likely to be problematic, the Mode3, which provides high transmission efficiency in the high load range, is set in the high driving load range, and the Mode4, which provides excellent transmission efficiency in an overdrive gear ratio that is often used at a high running speed of the vehicle 8, is set to the high running speed range. Even when the charged amount SOC is small and a range available with the charged amount SOC is small, the Mode1 may be set in a range in which the power outputted from the battery 64 is small, as long as consumption of the charged amount SOC is allowed. Further, when an operating efficiency of the engine 20 is poor, the Mode1 may be set. The Mode1 is set in the low running speed and low load range, depending on the charged amount SOC.

In the drive-mode switching map shown in FIG 11 or FIG 13, it can be seen that the Mode3 is set as the drive mode in the low running speed and high load range, and that the Mode4 is set as the drive mode in the high running speed range. Or, from another point view, it can be seen that Mode3 is set as the drive mode in the high load range, and that Mode4 is set as the drive mode in the high running speed and low load range.

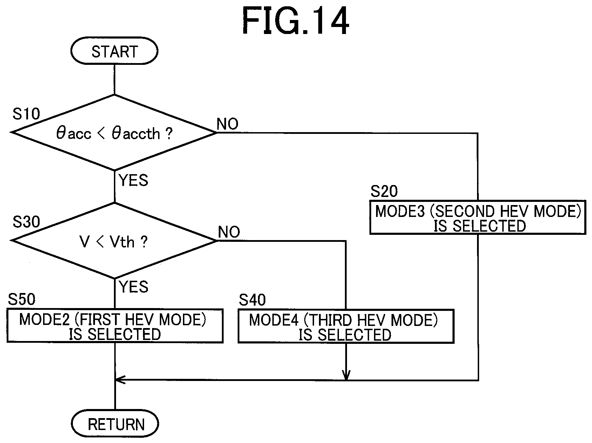

FIG 14 is a flow chart showing main parts of control operation of the electronic control apparatus 70, namely, a control routine executed by the electronic control apparatus 70, for establishing various modes as the drive mode of the vehicle 8 when the vehicle 8 is caused to run with the engine 20 being operated. This routine is executed in a repeated manner.

Each step of the control routine shown in the flow chart of FIG 14 corresponds to function of the hybrid control ECU 72. The control routine is initiated with step S10 that is implemented to check the driving load, specifically, determine whether or not the accelerator opening degree θacc is smaller than an accelerator-opening-degree threshold value θaccth that is a threshold value for determine whether the driving load is high or not. When a negative determination is made at step S10, the control flow goes to step S20 at which the Mode3 for the high load range is selected as the drive range. When an affirmative determination is made at step S10, step S30 is implemented to determine whether the running speed V is lower than a running-speed threshold value Vth that is a threshold value for determine whether the running speed V is a high running speed or not. When a negative determination is made at step S30, the control flow goes to step S40 at which the Mode4 for the high running speed range is selected as the drive range. When an affirmative determination is made at step S30, step S50 is implemented to select, as the drive mode, the Mode2 for the low running speed and low load range as the drive mode. It is noted that the drive mode of the vehicle 8 may be selected by using the drive-mode switching maps shown in FIGS. 10-13 in place of using the control routine shown in the flow chart of FIG 14. In drive-mode switching maps shown in FIGS. 10-13, the drive mode is selected, by applying the running speed V and the driving load to the maps.

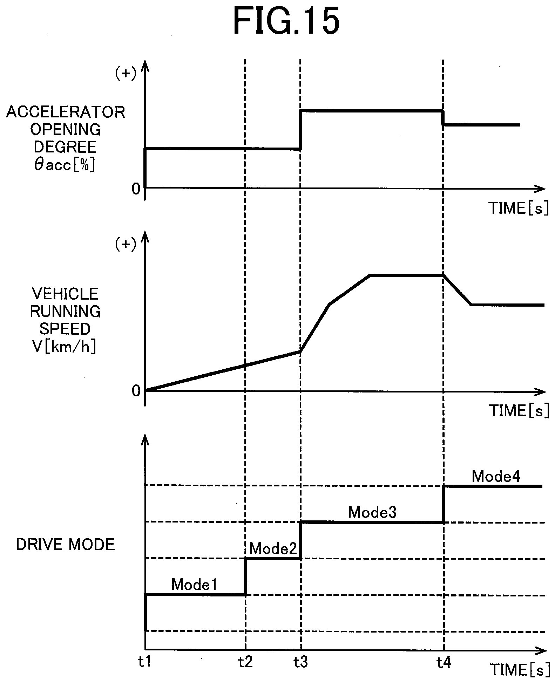

FIG 15 is a time chart in a case in which the control routine shown in the flow chart of FIG 14 is executed. In the time chart of FIG 15, time point t1 represents a point of time at which the accelerator is turned ON when the vehicle 8 is being stopped. After the accelerator is turned ON, acceleration is initially performed with a low accelerator opening degree θacc (see after time point t1). When the charged amount SOC exceeds a predetermined threshold value that is predetermined for allowing the BEV running, the BEV running is performed in the Mode1 (see time point t1 to time point t2). The drive mode is switched to the Mode2 as a result of increase of the running speed V (see time point t2). Thereafter, the accelerator opening degree θacc is increased with the accelerator pedal being further depressed, and the drive mode is switched to the Mode3 when the accelerator opening degree θacc enters an area of the Mode3 (see time point t3). Thereafter, the accelerator opening degree θacc is reduced as the running speed V is increased, and the drive mode is switched to the Mode4 when the accelerator opening degree θacc enters an area of the Mode4 (see time point t4).

Regarding a relationship between the rotational speed and the maximum possible torque in each of the first through third electric motors MG1, MG2, MG3, the relationship in the second electric motor MG2 as a representative will be described.

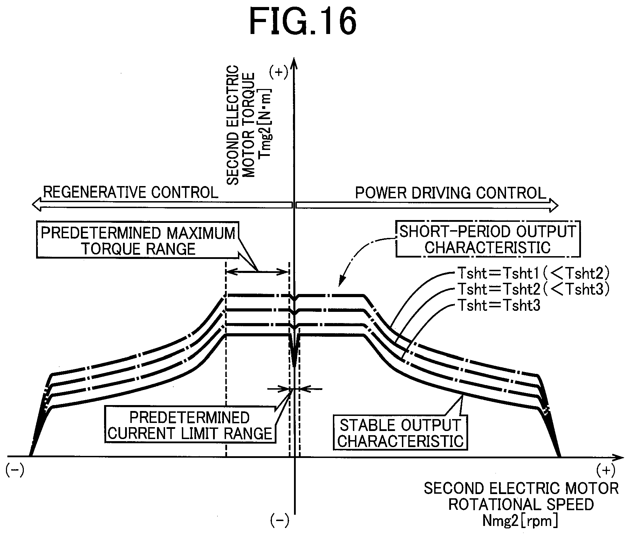

FIG 16 is a view showing, by way of example, a relationship between the second electric motor speed Nmg2 and the maximum possible torque of the second electric motor torque Tmg2. The maximum possible torque of the second electric motor torque Tmg2 has a stable output characteristic that allows continuous output and a short-period output characteristic that allows temporary output.

First, the stable output characteristic will be described. The second electric motor current Img2 upon output of the maximum possible torque of the second electric motor torque Tmg2 in the stable output characteristic will be referred to as "maximum drive current Img2_max1".

When the second electric motor speed Nmg2 is zero, the rotational speed of the rotational magnetic field generated by the stator is zero. In other words, in the second electric motor MG2, when a multi-phase AC current as the second electric motor current Img2 flows to a stator coil in the stator, a large drive current will flow continuously and biasedly through a specific phase among the multiple phases. In order to protect element of the inverter 62 that causes the drive current to flow through this specific phase, the maximum drive current Img2_max1 is reduced when the second electric motor speed Nmg2 is zero. That is, when the second electric motor speed Nmg2 is zero, the maximum possible torque of the second electric motor torque Tmg2 is reduced. It is noted that even where the maximum drive current Img2_max1 is caused to flow continuously through the stator, durability of the element of the inverter 62 is not reduced.

When the second electric motor speed Nmg2 is no longer zero and the second electric motor MG2 starts to be rotated at a relatively low rotational speed on a positive or reverse rotation direction, the rotational speed of the rotational magnetic field generated by the stator is no longer zero. That is, in the second electric motor MG2, when the multi-phase AC current as the second electric motor current Img2 flows through the stator, the bias of the drive current to a specific phase is eliminated and the drive currents flowing through the multiple phases are equalized. As a result, the maximum drive current Img2_max1 can be increased, and the maximum possible torque of the second electric motor torque Tmg2 in the stable output characteristic is also increased. A rotational speed range of the second electric motor speed Nmg2, in which the electric current is limited due to the second electric motor current Img2 in the stable output characteristic being biased to a specific phase among the multiple phases and a large current flowing continuously, will be referred to as "predetermined current limit range" (see FIG 16).

When an absolute value of the second electric motor speed Nmg2 is gradually increased and the second electric motor MG2 is rotated at a relatively high rotational speed, the maximum drive current Img2_max1 is gradually reduced as a frequency of the rotational magnetic field generated by the stator is increased. As a result, the maximum possible torque of the second electric motor torque Tmg2 in the stable output characteristic is gradually reduced in in both the positive rotation side and the negative rotation side. The rotational speed range of the second electric motor speed Nmg2 in which the maximum possible torque in the stable output characteristic is maximized is referred to as "predetermined maximum torque range" (see FIG 16).

In this way, the maximum possible torque of the second electric motor torque Tmg2 is determined by the maximum drive current Img2_max1. That is, the current limitation by the maximum drive current Img2_max1 limits the second electric motor torque Tmg2. The current limitation by the maximum drive current Img2_max1 and the limitation on the second electric motor torque Tmg2 are synonymous with each other.

Next, the short-period output characteristic will be described. The second electric motor current Img2 upon output of the maximum possible torque of the second electric motor torque Tmg2 in the short-period output characteristic will be referred to as "maximum drive current Img2_max2".

As shown in FIG 16, the shorter a short period Tsht in the short-period output characteristic, the larger the maximum drive current Img2_max2 can be, namely, the larger the maximum possible torque of the second electric motor torque Tmg2 can be. The maximum drive current Img2_max2 is larger than the maximum drive current Img1_max1, but the period during which the second electric motor current Img2 flows is short. Therefore, even if the maximum drive current Img2_max2 is caused to flow through the stator, the durability of the element of the inverter 62 is not be reduced.

Thus, both in the stable output characteristic and the short-period output characteristic, when the absolute value of the second electric motor speed Nmg2 is zero or near zero, both the maximum drive current Img2_max1 and maximum drive current Img2_max2 are smaller than when the absolute value of the second electric motor speed Nmg2 is slightly larger than zero. That is, when the absolute value of the second electric motor speed Nmg2 is zero or near zero, the maximum possible torque of the second electric motor torque Tmg2 is smaller than when the absolute value of the second electric motor speed Nmg2 is slightly larger than zero.

As in the second electric motor MG2, the first electric motor current Img1 upon output of the maximum possible torque of the first electric motor torque Tmg1 in the stable output characteristic will be referred to as "maximum drive current Img1_max1", and the first electric motor current Img1 upon output of the maximum possible torque of the first electric motor torque Tmg1 in the short-period output characteristic will be referred to as "maximum drive current Img1_max2". Similarly, the third electric motor current Img3 upon output of the maximum possible torque of the third electric motor torque Tmg3 in the stable output characteristic will be referred to as "maximum drive current Img3_max1", and the third electric motor current Img3 upon output of the maximum possible torque of the third electric motor torque Tmg3 in the short-period output characteristic will be referred to as "maximum drive current Img3_max2".

Hereinafter, there will be described control operation made by the electronic control apparatus 70 in a case in which the vehicle 8 starts to run on a rocky road or the like in a low running speed and high load range, namely, in a case in which the vehicle 8 runs in an extremely low running speed and high load range.

The electronic control apparatus 70 determines whether the crawl ON signal CRon is in its ON state, and determines whether the kickdown ON signal KDon is in its ON state.

When determining that the crawl ON signal CRon is in its OFF state, the electronic control apparatus 70 selects, as the drive mode, one of the Mode1, Mode2, Mode3 and Mode4, and causes the vehicle 8 to starts to run.

When determining that the crawl ON signal CRon is in its ON state and that the kickdown ON signal KDon is in its OFF state, the electronic control apparatus 70 selects, as the drive mode, the Mode5, i.e., the fourth HEV mode that is substantially the same as the Mode3. In the Mode5, the electronic control apparatus 70 causes the first electric motor MG1 to generate the positive torque that is to be transmitted to the front drive shafts 38, causes the second electric motor MG2 to generate the positive torque as a reaction torque and causes the third electric motor MG3 to generate the positive torque that is to be transmitted to the rear drive shafts 58. The reaction torque generated by the second electric motor MG2 is controlled to act on the second rotary element RE2 in a rotation direction that is the same as a rotation direction of the engine 20 connected to the first rotary element RE1. The "positive torque" is a torque that acts in the same direction as the engine torque Te when the engine 20 is operated, and is also a torque that acts in a direction causing the vehicle 8 to run forward. The "negative torque" is a torque that acts in a direction opposite to the positive torque. The reaction torque of the second electric motor MG2 is a torque that acts in a direction making the second electric motor speed Nmg2 zero. In the present embodiment, when the second electric motor MG2 is rotated in the forward direction, the second electric motor torque Tmg2 is a power driving torque, and when the second electric motor MG2 is rotated in the reverse direction, the second electric motor torque Tmg2 is a regenerative torque. The second electric motor torque Tmg2 is the reaction torque of the second electric motor MG2, and corresponds to "reaction torque" recited in the appended claims.

The Mode5 is substantially the same as the Mode3, except that the engine 20 may be either operated or stopped. The Mode5 also differs in that first electric motor MG1 is operated as the prime mover and that it is not necessary to adjust the electric power balance by supplying the generated power of the second electric motor MG2 to the third electric motor MG3 as in the Mode3. For example, in the Mode5, in order to maximize the first electric motor torque Tmg1, second electric motor torque Tmg2 and third electric motor torque Tmg3, if the electric power balance is deviated to positive or negative, it is compensated by charging the battery 64 or supplying the electric power from the battery 64. In the Mode5, as described later, the differential mechanism 32 is placed in the differential state. For example, each of the first electric motor torque Tmg1, second electric motor torque Tmg2 and third electric motor torque Tmg3 is set to the maximum possible torque that is maximum in the stable output characteristic. A state of the vehicle 8 in which the crawl ON signal CRon is in the ON state corresponds to "predetermined driving state" recited in the appended claims. The "predetermined driving state" is a predetermined state in which the driving load is in the high load range and the running speed of the vehicle 8 may be extremely low when the vehicle 8 starts to run or is running. The "predetermined driving state" does not only include a case in which the driving load is actually in the high load range and the running speed is actually extremely low, but also includes a case in which the crawl ON signal CRon is in the ON state, assuming a situation in which the vehicle 8 is running in an extremely low speed and high load on a rocky road or the like. The electronic control apparatus 70 is configured to execute the above-described crawl control in a response to an operation of the crawl switch 91 which is to be made by the driver to request execution of the crawl control, and is configured to determine that the vehicle is in the "predetermined driving state", when the operation of the crawl switch 91 has been made.

When determining that the crawl ON signal CRon is in the ON state and that the kickdown ON signal KDon is in the ON state, the electronic control apparatus 70 selects the Mode5 as the drive mode. The electronic control apparatus 70 causes the first electric motor MG1 to generate the positive torque, and causes the third electric motor MG3 to generate the positive torque. Further, the electronic control apparatus 70 executes a torque increase control for increasing the reaction torque of the second electric motor speed Nmg2 in a stepwise manner. The electronic control apparatus 70 executes the torque increase control in a response to the depressing operation of the accelerator pedal 22 made by the driver so as to place the kickdown ON signal KDon into the ON state. Namely, the torque increase control is triggered by the depressing operation of the accelerator pedal 22 made by the driver. Preferably, the second electric motor speed Nmg2 is controlled to be outside the above-described predetermined current limit range (see FIG 16). More preferably, the second electric motor speed Nmg2 is controlled to be within the above-described predetermined maximum torque range (see FIG 16). For example, when the Mode5 is selected, the reaction torque of the second electric motor torque Tmg2 is increased by the torque increase control, such that the second electric motor current Img2 exceeds a current limit by the maximum drive current Img2_max1 in the stable output characteristic within a predetermined period Tpred, and such that the second electric motor current Img2 does not exceed the current limit by the maximum drive current Img2_max2 in the short-period output characteristic within the predetermined period Tpred. The predetermined period Tpred is a period during which the second electric motor current Img2 exceeds the maximum drive current Img2_max1 in the stable output characteristic, but does not exceed the maximum drive current Img2_max2 in the short-period output characteristic. The predetermined period Tpred is determined in advance experimentally or by design. For example, in torque increase control, the second electric motor torque Tmg2 is the maximum possible torque in the short-period output characteristic when the short period Tsht described in FIG 16 is the predetermined period Tpred.

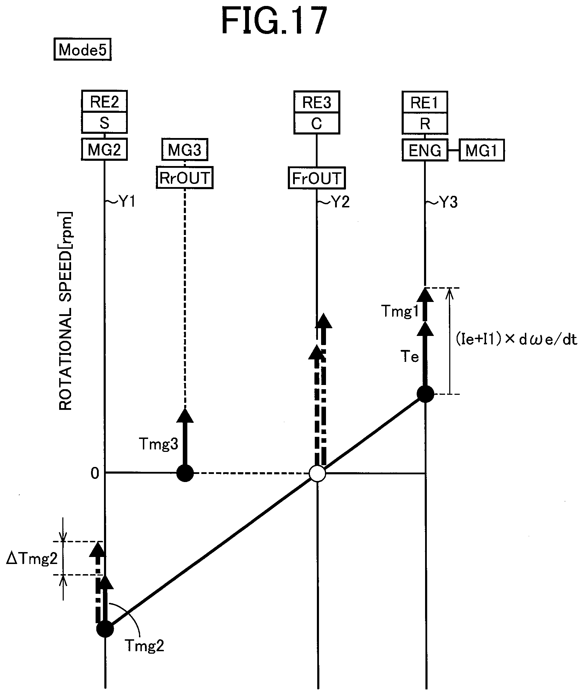

FIG 17 is a collinear diagram for explaining the Mode5, i.e., the fourth HEV mode in which the engine 20 is driven and rotated, each of the first and third electric motors MG1, MG3 is caused to generate the positive torque and the second electric motor MG2 is caused to generate the reaction torque. In FIG 17, each arrow represents a magnitude and a direction of the torque converted onto the axis of each rotary element RE1-RE3. In the Mode5, when the rotational speed of the third rotary element RE3 connected to the front wheels 12f through the front drive shafts 38 is zero or close to zero, the positive torque is generated in the first electric motor MG1 and the positive torque that is the reaction torque is generated in the second electric motor MG2. The differential mechanism 32 is in the differential state in which the engine 20 and the first electric motor MG1 are rotated in the forward direction while the second electric motor MG2 is rotated in the reverse direction. Since the first electric motor speed Nmg1 is the rotated in the forward direction and the second electric motor speed Nmg2 is rotated in in the reverse direction, the rotational speed of the rotational magnetic field generated by the stator in each of the first and second electric motors MG1, MG2 is no longer zero. That is, when the multi-phase AC current is caused to flow through the stators of the first and second electric motors MG1, MG2 as the first electric motor current Img1 and second electric motor current Img2, the bias of each drive current to a specific phase is eliminated whereby the drive current flowing through the multiple phases is divided equally. In the Mode5, a reaction force against a combined torque Tsum (= Te+Tmg1) that is a sum of the engine torque Te and the first electric motor torque Tmg1 is taken by the second electric motor MG2, and the torque is mechanically transmitted to the third rotary element RE3.

In FIG 17, in a case in which it is determined that the crawl ON signal CRon is in the ON state and that the kickdown ON signal KDon is in the OFF state, each of the engine torque Te, first electric motor torque Tmg1, second electric motor torque Tmg2 and third electric motor torque Tmg3 is represented by a thick solid line, and the torque transmitted to the front drive shafts 38 is represented by a thick single-dashed line. In the torque increase control, in a case in which it is determined that the crawl ON signal CRon is in the ON state and that the kickdown ON signal KDon is in the ON state, each of the engine torque Te, first electric motor torque Tmg1 and third electric motor torque Tmg3 is represented by a thick solid line, the second electric motor torque Tmg2 is represented by a thick single-dashed line, and the torque transmitted to the front drive shafts 38 is represented by a thick double-dashed line.

The above-described case in which it is determined that the crawl ON signal CRon is in the ON state and that the kickdown ON signal KDon is in the OFF state corresponds to a case in which the vehicle 8 is likely to run in an extremely low running speed and high load range with the crawl switch 91 being operated by the driver, but the driver's depressing operation of the accelerator pedal 22 is not at its maximum. In this case, in order to start running of the vehicle 8, the torque mechanically transmitted to the third rotary element RE3 represented by the thick single-dashed line in FIG 17 is transmitted to the front wheels 12f, and the third electric motor torque Tmg3 is transmitted to the rear wheels 12r.

The above-described case in which it is determined that the crawl ON signal CRon is in the ON state and that the kickdown ON signal KDon is in the ON state corresponds to a case in which the vehicle 8 is likely to run in an extremely low running speed and high load range with the crawl switch 91 being operated by the driver, and the driver's depressing operation of the accelerator pedal 22 is at its maximum. In this case, in order to start running of the vehicle 8, the torque mechanically transmitted to the third rotary element RE3 represented by the thick single-dashed line in FIG 17 is transmitted to the front wheels 12f, and the third electric motor torque Tmg3 is transmitted to the rear wheels 12r. In this case, the torque increase control is executed to increase the second electric motor torque Tmg2 by a predetermined amount ΔTmg2 in the stepwise manner only within the predetermined period Tpred. For example, the second electric motor torque Tmg2 is increased by the predetermined amount ΔTmg2 from the maximum possible torque in the stable output characteristic to the maximum possible torque in the short-period output characteristic. Immediately before the torque increase control is started, the engine torque Te and first electric motor torque Tmg1 are outputted for a period that is longer than the predetermined period Tpred, so that the combined torque Tsum (= Te + Tmg1) is equivalent to an inertial torque, which is a product of an engine angular acceleration dωe/dt and a sum (= Ie + I1) of an inertial moment Ie and an inertial moment I1. The inertial moment Ie is an inertial moment of the engine 20, and the inertial moment I1 is an inertial moment of the first electric motor MG1. The engine angular acceleration dωe/dt is a time derivative of an angular velocity ωe of the engine 20 corresponding to the engine rotational speed Ne, and is equal to an angular acceleration of the rotor shaft MG1rs of the first electric motor MG1. Since the torque increase control is executed only within the predetermined period Tpred, the torque applied to the first rotary element RE1 due to inertia is substantially the same as the combined torque Tsum (= Te+Tmg1) immediately before the torque increase control is started. Therefore, when the second electric motor torque Tmg2 is increased by the predetermined amount ΔTmg2, the torque mechanically transmitted to the third rotary element RE3 is temporarily increased from an amount represented by the thick single-dashed line to an amount represented by the thick double-dashed line. At least during an initial stage of the predetermined period Tpred, the torque mechanically transmitted to the third rotary element RE3 is increased by the torque increase control. When the torque increase control is executed to start running of the vehicle 8, the torque mechanically transmitted to the third rotary element RE3, which is represented by the thick double-dashed line in FIG 17, is transmitted to the front wheels 12f, and the third electric motor torque Tmg3 represented by the thick solid line is transmitted to the rear wheels 12r.

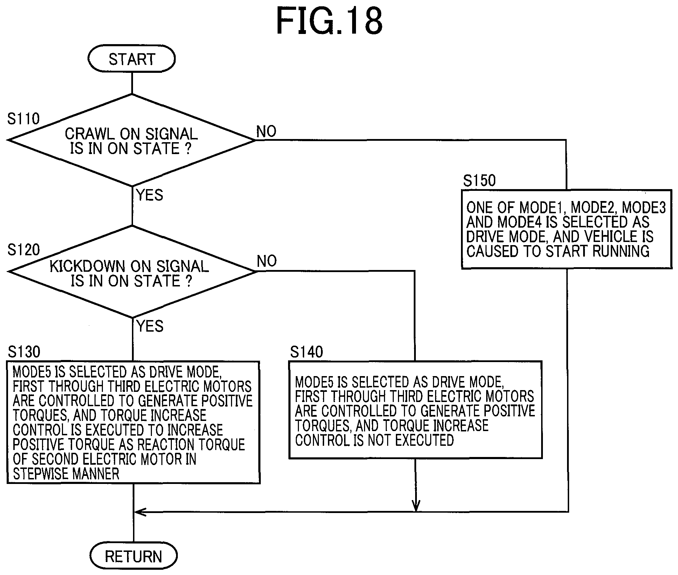

FIG 18 is a flow chart showing main parts of control operation of the electronic control apparatus 70, namely, a control routine executed by the electronic control apparatus 70, when the vehicle 8 is in the predetermine driving state. This control routine is executed in a repeated manner, for example, when the vehicle 8 starts to run.

The control routine is initiated with step S110 that is implemented to determine whether the crawl ON signal CRon is in the ON state or not. When an affirmative determination is made at step S110, step S120 is implemented to determine whether the kickdown ON signal KDon is in the ON state or not. When an affirmative determination is made at step S120, the control flow goes to step S130 at which the Mode5 is selected as the drive mode, the first electric motor torque Tmg1 is set to the positive torque, the second electric motor torque Tmg2 is set to the positive torque that serves as the reaction torque, and the third electric motor torque Tmg3 is set to the positive torque. Further, at step S130, the torque increase control is executed whereby the positive torque as the reaction torque of the second electric motor MG2 is increased in the stepwise manner. When a negative determination is made at step S120, the control flow goes to step S140 at which the Mode5 is selected as the drive mode, the first electric motor torque Tmg1 is set to the positive torque, the second electric motor torque Tmg2 is set to the positive torque that serves as the reaction torque, and the third electric motor torque Tmg3 is set to the positive torque, as at step S130. However, at step S140, the torque increase control is not executed. When a negative determination is made at step S110, the control flow goes to step S150 at which one of the Mode1, Mode2, Mode3 and Mode4 is selected as the drive mode, and then the vehicle 8 is caused to start running. After any one of steps S130, S140 and S150 has been implemented, one cycle of execution of the control routine is terminated.

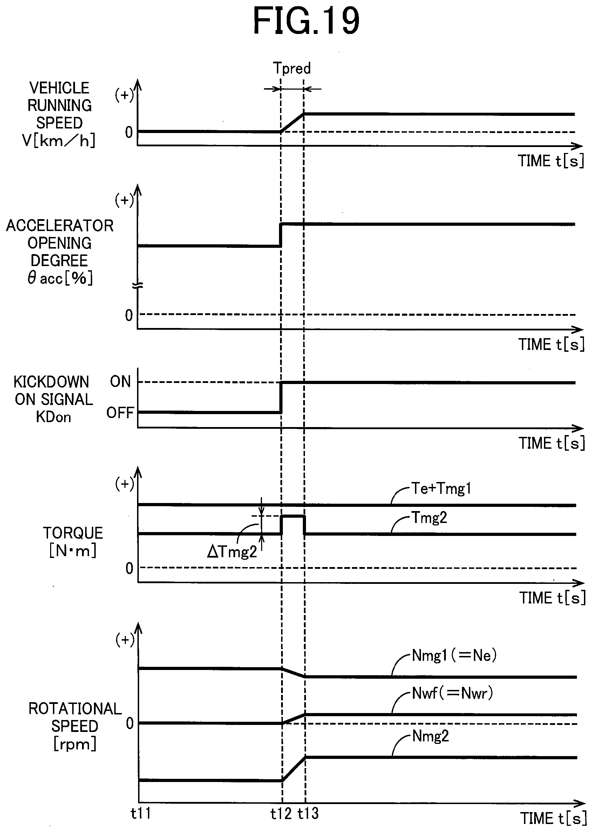

FIG 19 is a time chart in a case in which the control routine shown in the flow chart of FIG 18 is executed. In FIG 19, in a period from time point t11 to time point t12, the crawl ON signal CRon is in the ON state while the kickdown ON signal KDon is in the OFF state. Further, in the period from the time point t11 to the time point t12, the Mode 5 is selected as the drive mode, and each of the first electric motor torque Tmg1, second electric motor torque Tmg2 and third electric motor torque Tmg3 (not shown in FIG 19) is the positive torque, but the vehicle 8 cannot start to run with the front wheel rotational speed Nwf being zero. The front wheel rotational speed Nwf is an average rotational speed of the front right and left wheels 12f. For example, the vehicle 8 is stopped due to a step on a road such as a rocky road, causing the vehicle 8 to be unable to start running. The time point t12 represents a point of time at which the accelerator pedal 22 is pressed strongly by the driver whereby the kickdown ON signal KDon is switched from the OFF state to the ON state.

In the predetermined period Tpred, i.e., a period from the time point t12 to time point t13, the torque increase control is executed whereby the torque transmitted to the front wheels 12f is temporarily increased. Owing to increase of the torque transmitted to the front wheels 12f, the vehicle 8 becomes capable of climbing over the step on the road such as a rocky road, whereby the front wheel rotational speed Nwf is increased from zero, enabling the vehicle 8 to start running.

As described above, in the present embodiment, the differential mechanism 32 includes the three rotary elements consisting of the first through third rotary elements RE1-RE3. The engine 20 and the first electric motor MG1 are connected to the first rotary element RE1. The second electric motor MG2 is connected to the second rotary element RE2, and the front drive shafts 38 are connected to the third rotary element RE3. The third electric motor MG3 is connected to the rear drive shafts 58. When the vehicle 8 is caused to run with the engine 20 being operated, the first electric motor MG1, which is connected to the same rotary element as the engine 20, is operated as the electric generator, and the third electric motor MG3 is operated as the prime mover by the electric power generated by the first electric motor MG1, whereby the rear drive shafts 58 are driven, so as to perform a so-called series driving. In the series driving, torque vibration of the engine 20 can be prevented from being transmitted to the front drive shafts 38, so that a body of the vehicle 8 is less likely to be vibrated when the vehicle 8 is caused to run with the engine 20 being operated. Further, when the vehicle 8 is in the predetermined driving state, the processor of the electronic control apparatus 70 is configured to control the first, second and third electric motors MG1, MG2, MG3, such that the first electric motor MG1 is caused to generate the positive torque, such that the second electric motor MG2 is caused to generate the reaction torque, and such that the third electric motor MG3 is caused to generate the positive torque. When the vehicle 8 is in the predetermined driving state, the first electric motor MG1 is caused to generate the positive torque while the second electric motor MG2 is caused to generate the reaction torque, whereby the differential mechanism 32 is placed in the differential state in which each of the first and second electric motors MG1, MG2 is rotated in the forward rotation direction or reverse rotation direction. That is, the rotational speed of the rotational magnetic field generated by the stator in each of the first and second electric motors MG1, MG2 is no longer zero, whereby the bias of each drive current to a specific phase is eliminated. Even when the vehicle 8 is in the predetermined driving state, for example, in each of the first and second electric motors MG1, MG2, it is possible to transmit the positive torque to the front drive shaft 38 while suppressing continuous flow of large current biased to a specific phase of the inverter 62. In addition, in the third electric motor MG3, the positive torque can be transmitted to the rear drive shafts 58, so that it is possible to improve the power performance of the vehicle 8 in the predetermined driving state.

In the present embodiment, the processor of the electronic control apparatus 70 is configured to cause the second electric motor MG2 to increase the reaction torque in the stepwise manner, in addition to causing the second electric motor MG2 to generate the reaction torque. With the reaction torque of the second electric motor MG2 being increased in the stepwise manner, the inertial torque is maintained in the first rotary element RE1, and the torque transmitted to the front drive shafts 38 can be temporarily increased. For example, even when the engine 20 and the first electric motor MG1 are maxing out their torques, the drive power Fr can be temporarily increased.

In the present embodiment, the processor of the electronic control apparatus 70 is configured to increase the reaction torque of the second electric motor MG2 in the stepwise manner, in a response to the depressing operation of the accelerator pedal 22 that is made by the driver so as to place the kickdown ON signal KDon into the ON state. Thus, the drive power Fr can be increased in accordance with an intention of the driver, so that it is possible to improve drivability of the vehicle 8 in a situation in which the drive power Fr is required.

There will be described other embodiments of this invention. The same reference signs as used in the above-described first embodiment will be used in the following embodiments, to identify the functionally corresponding elements, and descriptions thereof are not provided.

### SECOND EMBODIMENT

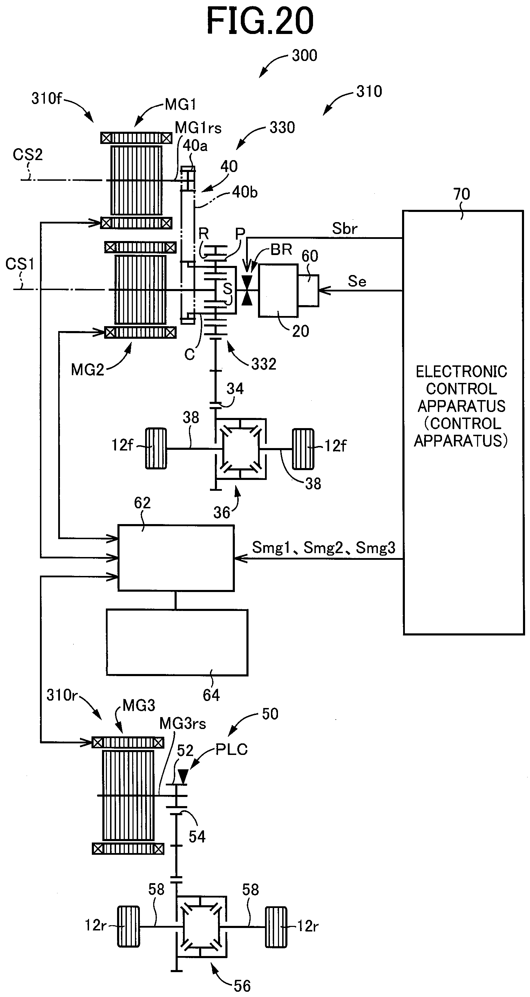

FIG 20 is a view schematically showing a construction of a vehicle 300 provided with a vehicle drive apparatus 310 (including a front drive portion 310f and a rear drive portion 310r) to which the present invention is applied. As shown in FIG 20, a front power transmission device 330 of the front drive portion 310f includes a differential mechanism 332. The differential mechanism 332 and the front differential gear device 36 are connected to each other through the front counter gear 34, as in the front power transmission device 30 in the above-described first embodiment.

The differential mechanism 332 is a single-pinion type planetary gear device having a sun gear S, pinion gears P, a carrier C and a ring gear R. The second electric motor MG2 is connected to the sun gear S. The engine 20 and the first electric motor MG1 are connected to the carrier C. The first electric motor MG1 is connected to the carrier C through the power transmission mechanism 40. The ring gear R meshes with the front counter gear 34. The front drive shafts 38 are connected to the ring gear R. The brake BR is connected at an end portion thereof to the output shaft of the engine 20 or the carrier C, and is connected at another end portion thereof to a non-rotatable member (not shown) such as a casing.

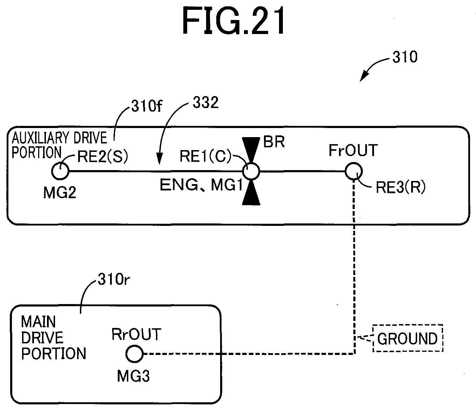

FIG 21 is a view showing a construction of the vehicle drive apparatus 310, by using a collinear diagram. The differential mechanism 332 of the front drive portion 310f includes three rotary elements consisting of the first rotary element RE1, the second rotary element RE2 and the third rotary element RE3. Each of the rotary elements RE1-RE3 of the differential mechanism 332 is connected to an actuator. Expressing using the collinear diagram, the first rotary element RE1 is the carrier C. The first rotary element RE1 is connected to the engine 20 and the first electric motor MG1. The second rotary element RE2 is the sun gear S. The second rotary element RE2 is connected to the second electric motor MG2. The third rotary element RE3 is the ring gear R. The third rotary element RE3 is connected to the front drive shafts 38, i.e., the front wheels 12f. The brake BR is a brake mechanism that is configured to stop rotation of the first rotary element RE1 by being placed in the engaged state. The rear drive portion 310r has substantially the same construction as the rear drive portion 10r in the above-described first embodiment, so that its description is not provided. The differential mechanism 332 is constructed such that the first, second and third rotary elements RE1, RE2, RE3 are to be rotated about a common axis in the form of the first axis CS1 about which the engine 20 is to be rotated, and such that the first rotary element RE1 is to be rotated at a rotational speed that is intermediate between the rotational speed of the second rotary element RE2 and the rotational speed of the third rotary element RE3 that is connected to the first drive shaft 38.

As in the vehicle drive apparatus 10 of the above-described first embodiment, in the vehicle drive apparatus 310, the drive mode can be switched among the plurality of modes, with the engine 20 and the first through third electric motors MG1, MG2, MG3 being controlled by the electronic control apparatus 70. Further, in the vehicle drive apparatus 310, the electronic control apparatus 70 controls the brake BG such that the brake BG is placed in the engaged state, as needed, upon switching of the drive mode.

In the differential mechanism 332, the rotational speed of the third rotary element RE3 as the output element is set to an acceleration side, i.e., overdrive (O/D) side, relative to the engine rotational speed Ne at the mechanical point. That is, the mechanical point of the differential mechanism 332 is set by an increase ratio. Therefore, in the vehicle drive apparatus 310, the Mode3 is the O/Dinput split mode, and the Mode4 is the O/Doutput split mode.

Hereinafter, there will be described control operation made by the electronic control apparatus 70 in a case in which the vehicle 8 runs in the extremely low running speed and high load range. The control operation made by the electronic control apparatus 70 in the present second embodiment is substantially the same as that in the above-described first embodiment, except the Mode5 that is different in contents. Therefore, only parts different from in the first embodiment will be described, while parts substantially the same in the first embodiment will not be described.

In the Mode5, the electronic control apparatus 70 causes the first electric motor MG1 to generate the positive torque that is to be transmitted to the front drive shafts 38, causes the second electric motor MG2 to generate the positive torque as the reaction torque and causes the third electric motor MG3 to generate the positive torque that is to be transmitted to the rear drive shafts 58. The reaction torque generated by the second electric motor MG2 is controlled to act on the second rotary element RE2 in a rotation direction that is opposite to a rotation direction of the engine 20 connected to the first rotary element RE1. In the Mode5, the differential mechanism 332 is placed in the differential state. In the torque increase control in which the reaction torque of the second electric motor MG2 is increased in the stepwise manner, the second electric motor MG2 is caused to generate the negative torque serving as the reaction torque such that the negative torque is increased. In the present embodiment, when the second electric motor MG2 is rotated in the forward direction, the second electric motor torque Tmg2 as the positive torque is the power driving torque, and the second electric motor torque Tmg2 as the negative torque is the regenerative torque. Although the detailed explanation is omitted, in the present second embodiment, each of the predetermined current limit range and the predetermined maximum torque range is a range in which the second electric motor MG2 is rotated in the forward direction.

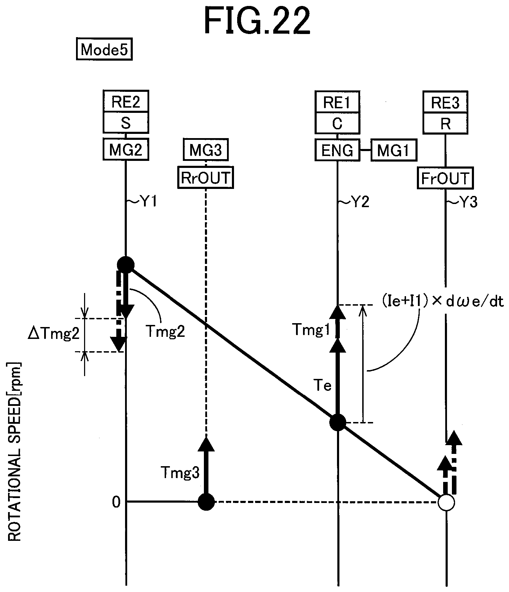

FIG 22 is a collinear diagram for explaining the Mode5, i.e., the fourth HEV mode in which the engine 20 is driven and rotated, each of the first and third electric motors MG1, MG3 is caused to generate the positive torque and the second electric motor MG2 is caused to generate the reaction torque. In FIG 22, each arrow represents a magnitude and a direction of the torque converted onto the axis of each rotary element RE1-RE3. In the Mode5, when the rotational speed of the third rotary element RE3 connected to the front wheels 12f through the front drive shafts 38 is zero or close to zero, the positive torque is generated in the first electric motor MG1 and the positive torque that is the reaction torque is generated in the second electric motor MG2. The differential mechanism 32 is in the differential state in which the engine 20 and the first electric motor MG1 are rotated in the forward direction while the second electric motor MG2 is rotated in the reverse direction. Thus, the differential mechanism 332 is placed in the differential state in which each of the engine 20 and the first electric motor MG1 is rotated in the forward direction while the second electric motor MG2 is rotated in the forward direction. Since the first electric motor speed Nmg1 is the rotated in the forward direction and the second electric motor speed Nmg2 is rotated in in the forward direction, the rotational speed of the rotational magnetic field generated by the stator in each of the first and second electric motors MG1, MG2 is no longer zero. That is, when the multi-phase AC current is caused to flow through the stators of the first and second electric motors MG1, MG2 as the first electric motor current Img1 and second electric motor current Img2, the bias of each drive current to a specific phase is eliminated whereby the drive current flowing through the multiple phases is divided equally. In the Mode5, the reaction force against the combined torque Tsum (= Te+Tmg1) that is a sum of the engine torque Te and the first electric motor torque Tmg1 is taken by the second electric motor MG2, and the torque is mechanically transmitted to the third rotary element RE3.

In FIG 22, in a case in which it is determined that the crawl ON signal CRon is in the ON state and that the kickdown ON signal KDon is in the OFF state, each of the engine torque Te, first electric motor torque Tmg1, second electric motor torque Tmg2 and third electric motor torque Tmg3 is represented by a thick solid line, and the torque transmitted to the front drive shafts 38 is represented by a thick single-dashed line. In the torque increase control, in a case in which it is determined that the crawl ON signal CRon is in the ON state and that the kickdown ON signal KDon is in the ON state, each of the engine torque Te, first electric motor torque Tmg1 and third electric motor torque Tmg3 is represented by a thick solid line, the second electric motor torque Tmg2 is represented by a thick single-dashed line, and the torque transmitted to the front drive shafts 38 is represented by a thick double-dashed line. When the torque increase control is executed to start running of the vehicle 300, the torque mechanically transmitted to the third rotary element RE3 represented by the thick double-dashed line in FIG 22 is transmitted to the front wheels 12f, while the third electric motor torque Tmg3 represented by the thick solid line is transmitted to the rear wheels 12r.

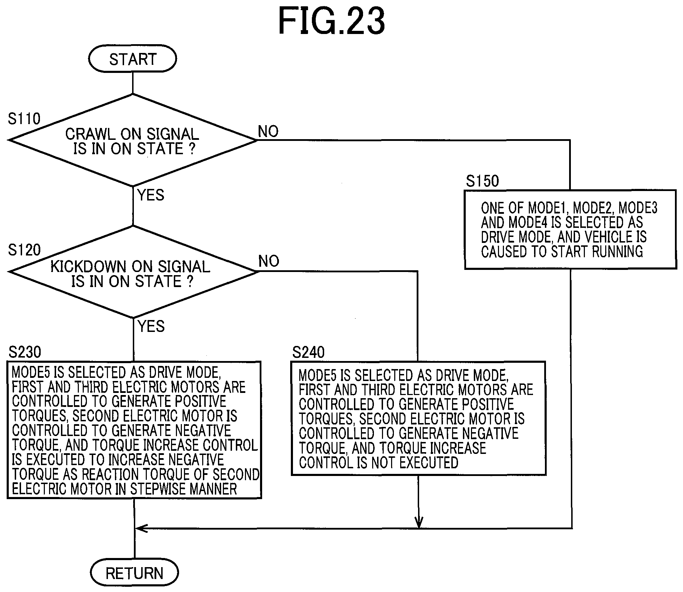

FIG 23 is a flow chart showing main parts of control operation of the electronic control apparatus, namely, a control routine executed by the electronic control apparatus, when the vehicle is in the predetermine driving state. This control routine is executed in a repeated manner, for example, when the vehicle 8 starts to run. This control routine shown in the flow chart of FIG 23 is substantially the same as the control routine shown in the flow chart of FIG 18 in the above-described first embodiment, except that steps S230 and S240 are implemented in place of steps S130 and S 140. Therefore, only parts different from in the above-described first embodiment will be described. The same reference signs as used in the first embodiment will be used to identify the functionally corresponding parts, and descriptions thereof are not provided.

At step S230, the Mode5 is selected as the drive mode, the first electric motor torque Tmg1 is set to the positive torque, the second electric motor torque Tmg2 is set to the negative torque that serves as the reaction torque, and the third electric motor torque Tmg3 is set to the positive torque. Further, at step S230, the torque increase control is executed whereby the negative torque as the reaction torque of the second electric motor MG2 is increased in the stepwise manner. At step S240, the Mode5 is selected as the drive mode, the first electric motor torque Tmg1 is set to the positive torque, the second electric motor torque Tmg2 is set to the negative torque that serves as the reaction torque, and the third electric motor torque Tmg3 is set to the positive torque, as at step S230. However, at step S240, the torque increase control is not executed.

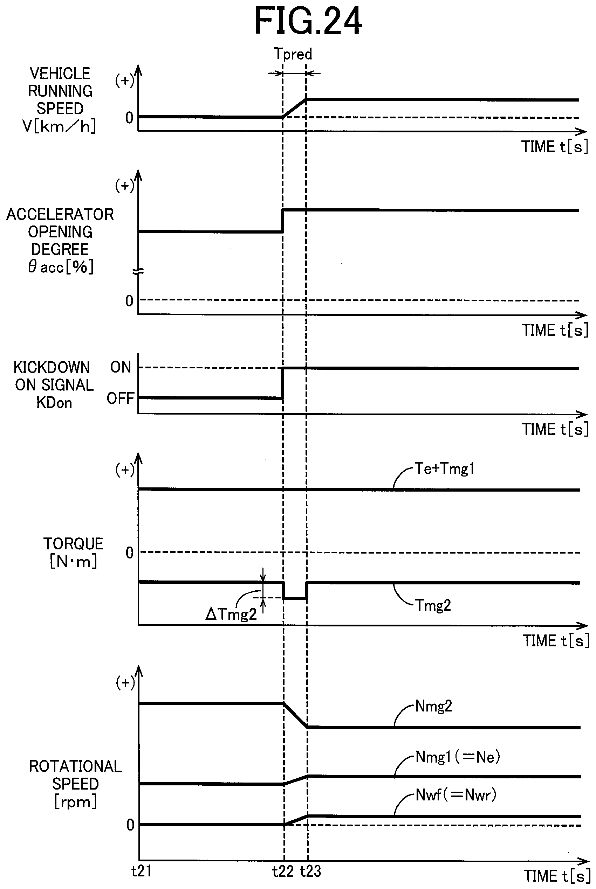

FIG 24 is a time chart in a case in which the control routine shown in the flow chart of FIG 23 is executed. In FIG 24, in a period from time point t21 to time point t22, the crawl ON signal CRon is in the ON state while the kickdown ON signal KDon is in the OFF state. Further, in the period from the time point t21 to the time point t22, the Mode5 is selected as the drive mode, and each of the first electric motor torque Tmg1 and third electric motor torque Tmg3 (not shown in FIG 24) is the positive torque while the second electric motor torque Tmg2 is the negative torque, but the vehicle 300 cannot start to run with the front wheel rotational speed Nwf being zero. The time point t22 represents a point of time at which the kickdown ON signal KDon is switched from the OFF state to the ON state.

In the predetermined period Tpred, i.e., a period from the time point t22 to time point t23, the torque increase control is executed whereby the torque transmitted to the front wheels 12f is temporarily increased.

As described above, in the present second embodiment, the same effects as those of the above-described first embodiment can be obtained.

### THIRD EMBODIMENT

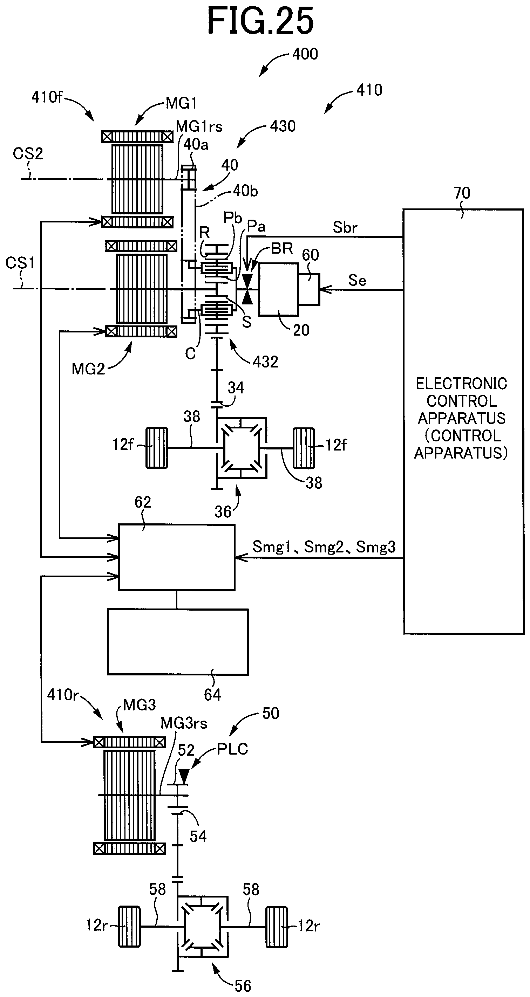

FIG 25 is a view schematically showing a construction of a vehicle 400 provided with a vehicle drive apparatus 410 (including a front drive portion 410f and a rear drive portion 410r) to which the present invention is applied. As shown in FIG 25, a front power transmission device 430 of the front drive portion 410f includes a differential mechanism 432. The differential mechanism 432 and the front differential gear device 36 are connected to each other through the front counter gear 34, as in the front power transmission device 30 in the above-described first embodiment.

The differential mechanism 432 is a double-pinion type planetary gear device having a sun gear S, pinion gears Pa, Pb, a carrier C and a ring gear R. The pinion gears Pa, Pb constitute a plurality of pairs of pinion gears, wherein each of the plurality of pairs of pinion gears consists of the pinion gears Pa, Pb meshing with each other. The second electric motor MG2 is connected to the sun gear S. The engine 20 and the first electric motor MG1 are connected to the carrier C. The first electric motor MG1 is connected to the carrier C through the power transmission mechanism 40. The ring gear R meshes with the front counter gear 34. The front drive shafts 38 are connected to the ring gear R. The brake BR is connected at an end portion thereof to the output shaft of the engine 20 or the carrier C, and is connected at another end portion thereof to a non-rotatable member (not shown) such as a casing.

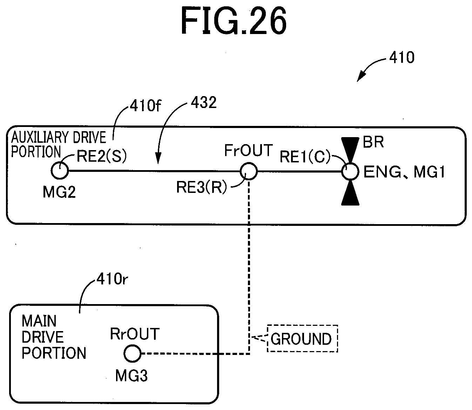

FIG 26 is a view showing a construction of the vehicle drive apparatus 410, by using a collinear diagram. The differential mechanism 432 of the front drive portion 410f includes three rotary elements consisting of the first rotary element RE1, the second rotary element RE2 and the third rotary element RE3. Each of the rotary elements RE1-RE3 of the differential mechanism 432 is connected to an actuator. Expressing using the collinear diagram, the first rotary element RE1 is the carrier C. The first rotary element RE1 is connected to the engine 20 and the first electric motor MG1. The second rotary element RE2 is the sun gear S. The second rotary element RE2 is connected to the second electric motor MG2. The third rotary element RE3 is the ring gear R. The third rotary element RE3 is connected to the front drive shafts 38, i.e., the front wheels 12f. The brake BR is a brake mechanism that is configured to stop rotation of the first rotary element RE1 by being placed in the engaged state. The rear drive portion 410r has substantially the same construction as the rear drive portion 10r in the above-described first embodiment, so that its description is not provided.

As in the vehicle drive apparatus 10 of the above-described first embodiment, in the vehicle drive apparatus 410, the drive mode can be switched among the plurality of modes, with the engine 20 and the first through third electric motors MG1, MG2, MG3 being controlled by the electronic control apparatus 70. Further, in the vehicle drive apparatus 410, the electronic control apparatus 70 controls the brake BG such that the brake BG is placed in the engaged state, as needed, upon switching of the drive mode.

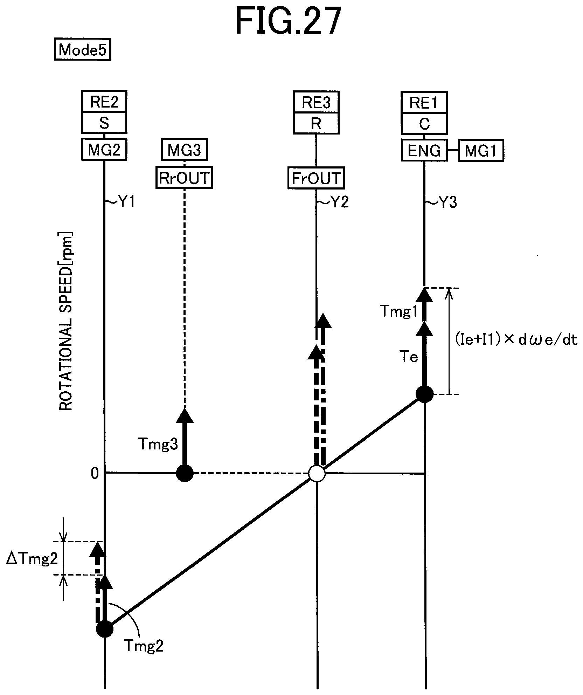

In the differential mechanism 432, the rotational speed of the third rotary element RE3 as the output element is set to a deceleration side, i.e., underdrive (U/D) side, relative to the engine rotational speed Ne at the mechanical point. That is, the mechanical point of the differential mechanism 432 is set by a reduction ratio. Therefore, in the vehicle drive apparatus 410, the Mode3 is the U/Dinput split mode, and the Mode4 is the U/Doutput split mode. In the present fourth embodiment, the Mode5 is shown in a collinear diagram of FIG 27 that is substantially the same as the collinear diagram of FIG 17 in the above-described first embodiment.

As described above, in the present third embodiment, the same effects as those of the above-described first embodiment can be obtained.

### FOURTH EMBODIMENT

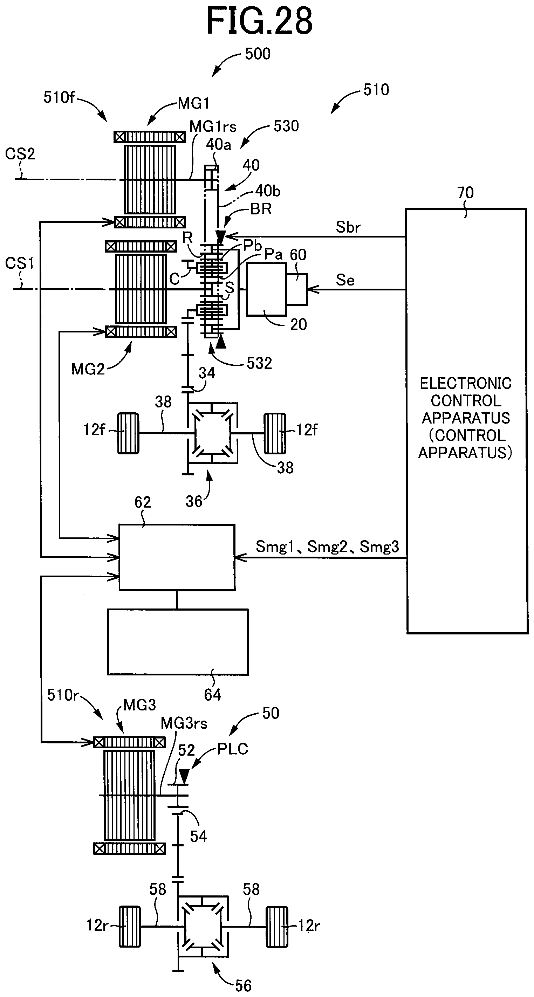

FIG 28 is a view schematically showing a construction of a vehicle 500 provided with a vehicle drive apparatus 510 (including a front drive portion 510f and a rear drive portion 510r) to which the present invention is applied. As shown in FIG 28, a front power transmission device 530 of the front drive portion 510f includes a differential mechanism 532. The differential mechanism 532 and the front differential gear device 36 are connected to each other through the front counter gear 34, as in the front power transmission device 30 in the above-described first embodiment.

The differential mechanism 532 is a double-pinion type planetary gear device having a sun gear S, pinion gears Pa, Pb, a carrier C and a ring gear R. The pinion gears Pa, Pb constitute a plurality of pairs of pinion gears, wherein each of the plurality of pairs of pinion gears consists of the pinion gears Pa, Pb meshing with each other. The second electric motor MG2 is connected to the sun gear S. The engine 20 and the first electric motor MG1 are connected to the ring gear R. The first electric motor MG1 is connected to the ring gear R through the power transmission mechanism 40. The carrier C meshes with the front counter gear 34. The front drive shafts 38 are connected to the carrier C. The brake BR is connected at an end portion thereof to the ring gear R, and is connected at another end portion thereof to a non-rotatable member (not shown) such as a casing.

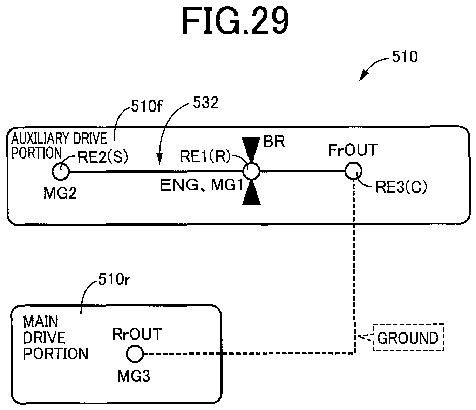

FIG 29 is a view showing a construction of the vehicle drive apparatus 510, by using a collinear diagram. The differential mechanism 532 of the front drive portion 510f includes three rotary elements consisting of the first rotary element RE1, the second rotary element RE2 and the third rotary element RE3. Each of the rotary elements RE1-RE3 of the differential mechanism 532 is connected to an actuator. Expressing using the collinear diagram, the first rotary element RE1 is the ring gear R. The first rotary element RE1 is connected to the engine 20 and the first electric motor MG1. The second rotary element RE2 is the sun gear S. The second rotary element RE2 is connected to the second electric motor MG2. The third rotary element RE3 is the carrier C. The third rotary element RE3 is connected to the front drive shafts 38, i.e., the front wheels 12f. The brake BR is a brake mechanism that is configured to stop rotation of the first rotary element RE1 by being placed in the engaged state. The rear drive portion 510r has substantially the same construction as the rear drive portion 10r in the above-described first embodiment, so that its description is not provided.

As in the vehicle drive apparatus 10 of the above-described first embodiment, in the vehicle drive apparatus 510, the drive mode can be switched among the plurality of modes, with the engine 20 and the first through third electric motors MG1, MG2, MG3 being controlled by the electronic control apparatus 70. Further, in the vehicle drive apparatus 510, the electronic control apparatus 70 controls the brake BG such that the brake BG is placed in the engaged state, as needed, upon switching of the drive mode.

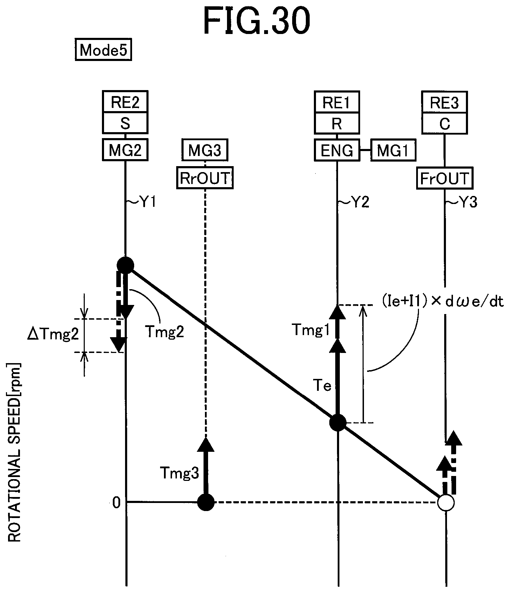

In the differential mechanism 532, the rotational speed of the third rotary element RE3 as the output element is set to an acceleration side, i.e., overdrive (O/D) side, relative to the engine rotational speed Ne at the mechanical point. That is, the mechanical point of the differential mechanism 532 is set by an increase ratio. Therefore, in the vehicle drive apparatus 510, the Mode3 is the O/Dinput split mode, and the Mode4 is the O/Doutput split mode. In the present fourth embodiment, the Mode5 is shown in a collinear diagram of FIG 30 that is substantially the same as the collinear diagram of FIG 22 in the above-described second embodiment.

As described above, in the present fourth embodiment, the same effects as those of the above-described first embodiment can be obtained.

While the preferred embodiments of this invention have been described in detail by reference to the drawings, it is to be understood that the invention may be otherwise embodied.

In the above-described first through fourth embodiments, both of the first electric motor MG1 and the second electric motor MG2 have the stable output characteristic and the short-period output characteristic in which the maximum drive current is smaller when the absolute value of the rotational speed is near zero than when the absolute value of the rotational speed is slightly larger than zero. However, the present invention is not limited to such details. For example, in the present invention, both of the first and second electric motors MG1, MG2 do not necessarily have to have such a characteristic, as long as at least one of the first and second electric motors MG1, MG2 has such a characteristic. Where the first electric motor MG1 has the above characteristic, it is possible to suppress continuous flow of large current biased to a specific phase of inverter 62, which controls the first electric motor MG1. Where the second electric motor MG2 has the above characteristic, it is possible to suppress continuous flow of large current biased to a specific phase of inverter 62, which controls the second electric motor MG2.

In the above-described first through fourth embodiments, the torque increase control is executed such that the second electric motor torque Tmg2 is increased by the predetermined amount ΔTmg2 from the maximum possible torque in the stable output characteristic to the maximum possible torque in the short-period output characteristic. However, the present invention is not limited to such details. For example, in the torque increase control, the second electric motor torque Tmg2 before execution of the torque increase control may be lower than the maximum possible torque in the stable output characteristic, and the second electric motor torque Tmg2 after execution of the torque increase control may be lower than the maximum possible torque in the short-period output characteristic. Preferably, owing to execution of the torque increase control, the second electric motor torque Tmg2 is caused to exceed the maximum possible torque in the stable output characteristic. That is, the torque increase control causes the current limit by the maximum drive current Img2_max1 in the stable output characteristic to be exceeded. Even in such a case, it is possible to obtain a certain effect that the drive power Fr can be temporarily increased even when the engine 20 and the first electric motor MG1 are maxing out their torques, for example.

In the above-described first through fourth embodiments, the torque increase control is executed with the engine 20 being operated. However, the present invention is not limited to such a detail. For example, the torque increase control may be executed with the engine 20 being stopped.

In the above-described first through fourth embodiments, the kickdown ON signal KDon is placed in the ON state when the kickdown switch 24 is turned ON. However, the present invention is not limited to such a detail. For example, the kickdown ON signal KDon may be placed in the ON state when the accelerator opening degree θacc is higher than a predetermined value θacc_jdg and an increase rate α that is a time derivative of the accelerator opening degree θacc is higher than a predetermined value α_jdg. The predetermined value θacc_jdg and the predetermined value α_jdg are predetermined values that are determined experimentally or by design in order to determine whether the amount of the depressing operation of the accelerator pedal 22 by the driver is close to the maximum value. In this case, the depressing operation of the accelerator pedal 22 by the driver, by which the kickdown ON signal KDon is placed in the ON state, corresponds to "operation that is made by a driver of the vehicle to increase a drive power", which is recited in the appended claims.

In the above-described first through fourth embodiments, the "predetermined driving state" may be determined based on the accelerator opening degree θacc and the running speed V. For example, it is possible to determine that the vehicle is in the "predetermined driving state" when a required value of the drive power Fr is larger than a predetermined value Fr_jdg and the running speed V is higher than a predetermined value V_jdg, wherein the required value of the drive power Fr is calculated based on the accelerator opening degree θacc and the running speed V. The predetermined value Fr_jdg and the predetermined value V_jdg are predetermined values that are determined experimentally or by design in order to determine whether the vehicle is in the predetermined driving state or not.

In the differential mechanism 32 in the above-described first embodiment, the first rotary element RE1 may be any one of the ring gear R and the sun gear S, while the second rotary element RE2 may be is the other of the ring gear R and the sun gear S. Where the first rotary element RE1 is the sun gear S while the second rotary element RE2 is the ring gear R, the engine 20 and the first electric motor MG1 are connected to the sun gear S while the second electric motor MG2 is connected to the ring gear R.

In the differential mechanism 332 in the above-described second embodiment, the second rotary element RE2 may be any one of the sun gear S and the ring gear R, while the third rotary element RE3 may be the other of the sun gear S and the ring gear R. Where the second rotary element RE2 is the ring gear R while the third rotary element RE3 is the sun gear S, the second electric motor MG2 is connected to the ring gear R while the front drive shafts 38 are connected to the sun gear S.

In the differential mechanism 432 in the above-described third embodiment, the first rotary element RE1 may be any one of the carrier C and the sun gear S, while the second rotary element RE2 may be is the other of the carrier C and the sun gear S. Where the first rotary element RE1 is the sun gear S while the second rotary element RE2 is the carrier C, the engine 20 and the first electric motor MG1 are connected to the sun gear S while the second electric motor MG2 is connected to the carrier C.

In the differential mechanism 532 in the above-described fourth embodiment, the second rotary element RE2 may be any one of the sun gear S and the carrier C, while the third rotary element RE3 may be the other of the sun gear S and the carrier C. Where the second rotary element RE2 is the carrier C while the third rotary element RE3 is the sun gear S, the second electric motor MG2 is connected to the carrier C while the front drive shafts 38 are connected to the sun gear S.

As shown in the above-described first through fourth embodiments, the second rotary element RE2 is a rotary element located in one of opposite ends in the collinear diagram in which the three rotary elements of the differential mechanism are arranged in a straight line.

In the first through fourth embodiments, the power transmission mechanism 40 may be, for example, a pair of gears or a combination of chain and sprocket. Where the power transmission mechanism 40 is the pair of gears, the intermediate gear 40a and the first rotary element RE1 are connected to each other through a counter gear that meshes with the intermediate gear 40a and the first rotary element RE1.

In the first through fourth embodiments, the first electric motor MG1 may be disposed to be coaxial with the engine 20 and the second electric motor MG2. That is, the first electric motor MG1 may be disposed on the first axis CS1 that is the rotation axis of the differential mechanism 32. In this case, too, it is possible to obtain a certain effect that any one of various modes can be established as the drive mode of the vehicle when the vehicle is caused to run with the engine 20 being operated.

In the first through fourth embodiments, the brake mechanism, which is configured to stop rotation of the first rotary element RE1, may be constituted by a one-way clutch in place of the brake BR.

In the first through fourth embodiments, the brake BR does not necessarily have to be provided. In a case without provision of the brake BR, among kinds of the Mode1, the Model_MG2_BRon is not executed. As described above, in the Mode1_MG3, the BEV driving can be performed even if the brake BR is not engaged, so that the Mode1_MG3 can be executed even if the brake BR is not provided.

In the first through fourth embodiments, one of the front and rear wheels 12f, 12r, to which the powers of the engine 20 and the second electric motor MG2 are to be transmitted, may be the rear wheel 12r, while the other of the front and rear wheels 12f, 12r, to which the power of the third electric motor MG3 is to be transmitted, may be the front wheel 12f. In other words, the first drive shaft may be each of the rear drive shafts 58 while the second drive shaft may be each of the front drive shafts 38.

In the first through fourth embodiments, the drive portion including the third electric motor MG3 is the main drive portion in the PHEV in which it is expected that the BEV driving in the Mode1_MG3 will be used frequently. However, the drive portion including the engine 20 and the second electric motor MG2 may be the main drive portion in the HEV.

It is to be understood that the embodiments described above are given for illustrative purpose only, and that the present invention may be embodied with various modifications and improvements which may occur to those skilled in the art.

### NOMENCLATURE OF ELEMENTS

8: vehicle
10: vehicle drive apparatus
12f: front wheel
12r: rear wheel
20: engine
32: differential mechanism
S: sun gear (second rotary element)
C: carrier (third rotary element)
R: ring gear (first rotary element)
38: front drive shaft (first drive shaft)
58: rear drive shaft (second drive shaft)
70: electronic control apparatus (control apparatus)
300: vehicle
310: vehicle drive apparatus
332: differential mechanism
S: sun gear (second rotary element)
C: carrier (first rotary element)
R: ring gear (third rotary element)
400: vehicle
410: vehicle drive apparatus
432: differential mechanism
S: sun gear (second rotary element)
C: carrier (first rotary element)
R: ring gear (third rotary element)
500: vehicle
510: vehicle drive apparatus
532: differential mechanism
S: sun gear (second rotary element)
C: carrier (third rotary element)
R: ring gear (first rotary element)
Fr: drive power
MG1: first electric motor
MG2: second electric motor
MG3: third electric motor
RE1: first rotary element
RE2: second rotary element
RE3: third rotary element
Tmg2: second electric motor torque (reaction torque)

## Claims

1. A drive apparatus (10;310;410;510) for a vehicle (8;300;400;500), the drive apparatus (10;310;410;510) comprising:
an engine (20);
a first electric motor (MG1);
a second electric motor (MG2);
a third electric motor (MG3);
a differential mechanism (32;332;432;532);
a first drive shaft (38) for driving one of front and rear wheels (12f, 12r) of the vehicle (8;300;400;500);
a second drive shaft (58) for driving the other of the front and rear wheels (12f, 12r); and
a control apparatus (70) including a processor,
wherein the differential mechanism (32;332;432;532) includes a first rotary element (RE1), a second rotary element (RE2) and a third rotary element (RE3),
wherein the engine (20) and the first electric motor (MG1) are connected to the first rotary element (RE1), the second electric motor (MG2) is connected to the second rotary element (RE2), and the first drive shaft (38) is connected to the third rotary element (RE3),
wherein the third electric motor (MG3) is connected to the second drive shaft (58),
and wherein, when the vehicle (8;300;400;500) is in a predetermined driving state, the processor is configured to control the first, second and third electric motors (MG1,MG2,MG3), such that the first electric motor (MG1) is caused to generate a positive torque, such that the second electric motor (MG2) is caused to generate a reaction torque (Tmg2), and such that the third electric motor (MG3) is caused to generate the positive torque.

2. The drive apparatus (10;310;410;510) according to claim 1,
wherein the processor is configured to cause the second electric motor (MG2) to increase the reaction torque (Tmg2) in a stepwise manner, in addition to causing the second electric motor (MG2) to generate the reaction torque (Tmg2).

3. The drive apparatus (10;310;410;510) according to claim 2,
wherein the processor is configured to increase the reaction torque (Tmg2) of the second electric motor (MG2) in the stepwise manner, in a response to an operation that is made by a driver of the vehicle (8;300;400;500) to increase a drive power.

4. The drive apparatus (10;310;410;510) according to any one of claims 1-3,
wherein the processor is configured to execute a crawl control in a response to an operation of a crawl switch (91) which is to be made by a driver of the vehicle (8;300;400;500) to request execution of the crawl control, and
wherein the processor is configured to determine that the vehicle (8;300;400;500) is in the predetermined driving state, when the operation of the crawl switch (91) has been made.

5. The drive apparatus (10;410) according to any one of claims 1-4, wherein the differential mechanism (32;432) is constructed such that the first, second and third rotary elements (RE1,RE2,RE3) are to be rotated about a common axis (CS1) about which the engine (20) is to be rotated, and such that the third rotary element (RE3), which is connected to the first drive shaft (38), is to be rotated at a rotational speed that is intermediate between a rotational speed of the second rotary element (RE2) and a rotational speed of the first rotary element (RE1), and
wherein the reaction torque (Tmg2), which is generated by the second electric motor (MG2) when the vehicle (8;400) is in the predetermined driving state, is controlled to act on the second rotary element (RE2) in a rotation direction that is the same as a rotation direction of the engine (20) connected to the first rotary element (RE1).

6. The drive apparatus (310;510) according to any one of claims 1-4, wherein the differential mechanism (332;532) is constructed such that the first, second and third rotary elements (RE1,RE2,RE3) are to be rotated about a common axis (CS1) about which the engine (20) is to be rotated, and such that the first rotary element (RE1) is to be rotated at a rotational speed that is intermediate between a rotational speed of the second rotary element (RE2) and a rotational speed of the third rotary element (RE3) that is connected to the first drive shaft (38), and
wherein the reaction torque (Tmg2), which is generated by the second electric motor (MG2) when the vehicle (8;400) is in the predetermined driving state, is controlled to act on the second rotary element (RE2) in a rotation direction that is opposite to a rotation direction of the engine (20) connected to the first rotary element (RE1).
